# EUROPEAN PATENT APPLICATION

(11) **EP 4 524 412 A1**
(43) Date of publication of application: **19.03.2025**
(21) Application number: 24790812.2
(22) Date of filing: 01.03.2024
(51) Int. Cl.: F16C 11/04, G06F 1/16

(54) **ROTATING SHAFT MECHANISM AND ELECTRONIC DEVICE**

(30) Priority: 25.07.2023 CN 202310921643
(71) Applicant: Huawei Technologies Co., Ltd., Shenzhen, Guangdong 518129 (CN)
(72) Inventor: SHEN, Hewen, Shenzhen, Guangdong 518129 (CN); ZHONG, Ding, Shenzhen, Guangdong 518129 (CN); WU, Wenwen, Shenzhen, Guangdong 518129 (CN); FAN, Wen, Shenzhen, Guangdong 518129 (CN); HU, Yuehua, Shenzhen, Guangdong 518129 (CN)
(74) Representative: MERH-IP Matias Erny Reichl Hoffmann Patentanwälte PartG mbB
(86) International application number: PCT/CN2024/079652
(87) International publication number: WO 2025/020532

(57) **Abstract**

Embodiments of this application provide a hinge mechanism and an electronic device, and relate to the field of electronic device technologies, to provide a hinge mechanism with a small thickness. The hinge mechanism includes: an inner hinge, a rotating assembly that can rotate relative to the inner hinge, and an outer hinge. The inner hinge is connected to the outer hinge, and the rotating assembly is located between the inner hinge and the outer hinge. The rotating assembly includes a first swing arm, a second swing arm, and a linkage structure, and the first swing arm and the second swing arm may rotate relative to the inner hinge. The linkage structure includes a rotating member, a first translation member, and a second translation member. The first swing arm and the second swing arm can drive the first translation member and the second translation member to move reversely, and the rotating member can move synchronously with the first translation member and the second translation member. The rotating member is placed horizontally, and an axial direction of the rotating member is a thickness direction of the hinge mechanism. A thickness of the rotating member is adjusted, so that a flattened-shape hinge mechanism can be obtained. This is not limited by a size in the axial direction of the rotating member.

## Description

This application claims priority to Chinese Patent Application No. 202310921643.9, filed with the China National Intellectual Property Administration on July 25, 2023 and entitled "HINGE MECHANISM AND ELECTRONIC DEVICE", which is incorporated herein by reference in its entirety.

### TECHNICAL FIELD

This application relates to the field of electronic device technologies, and in particular, to a hinge mechanism and an electronic device.

### BACKGROUND

Flexible displays are a development trend of the display industry. Foldable electronic devices have become a focus in recent years, and mobile phone manufacturers have launched foldable mobile phones.

A foldable electronic device includes a housing, a hinge mechanism, and a flexible display. The housing includes a left housing and a right housing that are disposed separately, the hinge mechanism is located between the left housing and the right housing, and the flexible display is mounted on the left housing and the right housing. When the left housing and the right housing are folded under driving of the hinge mechanism, the flexible display can be driven to fold, so that the electronic device is in a folded state. In the folded state, the electronic device has a small volume, and is easy to store. When the left housing and the right housing are unfolded under driving of the hinge mechanism, the flexible display is driven to unfold, so that the electronic device is in an unfolded state. In the unfolded state, a display of the electronic device is large, and user experience can be improved. Therefore, the hinge mechanism is a key component of the foldable electronic device.

With continuous development of the electronic device toward lightness and thinness, the hinge mechanism also needs to be continuously developed toward a flat shape.

### SUMMARY

Embodiments of this application provide a hinge mechanism and an electronic device having the hinge mechanism, to provide a hinge mechanism with a small thickness.

To achieve the foregoing objective, this application uses the following technical solutions.

According to a first aspect in embodiments of this application, a hinge mechanism is provided. The hinge mechanism may be used in a foldable electronic device having a flexible display, for example, may be used in a device such as a foldable mobile phone or a foldable tablet computer.

The hinge mechanism includes an inner hinge and an outer hinge that are detachably connected, and a rotating assembly that is located between the inner hinge and the outer hinge and that is capable of rotating relative to the inner hinge. The rotating assembly includes a first swing arm, a second swing arm, and a linkage structure. The first swing arm and the second swing arm, for example, can rotate relative to each other or rotate back to each other along a rotation axis of the hinge mechanism, so that the hinge mechanism switches between a flattened state and a folded state. The first swing arm and the second swing arm rotate relative to each other, and the hinge mechanism switches to the folded state. The first swing arm and the second swing arm rotate back to each other, and the hinge mechanism is switched to the flattened state. The linkage structure includes a rotating member, a first translation member, and a second translation member. The first translation member is slidably connected to the inner hinge and is clamped to the first swing arm; the second translation member is slidably connected to the inner hinge and is clamped to the second swing arm; and the rotating member is connected to the first translation member and the second translation member and is rotatably connected to the inner hinge, and the rotating member is horizontally placed. A rotation axis of the rotating member is parallel to a first direction, and the first direction is a direction from the inner hinge to the outer hinge. In a process in which the hinge mechanism is switched from the flattened state to the folded state, the first swing arm and the second swing arm rotate relative to each other along the rotation axis of the hinge mechanism, to drive the first translation member and the second translation member to slide reversely along directions parallel to a second direction. When the first translation member and the second translation member slide, the rotating member is driven to rotate. The second direction intersects both a direction of the rotation axis and the first direction, and the first direction is perpendicular to the direction of the rotation axis.

According to the hinge mechanism provided in embodiments of this application, the linkage structure includes the first translation member, the second translation member, and the rotating member. The first translation member and the second translation member always move along a width direction (the second direction) of the hinge mechanism, and size requirements of the first translation member and the second translation member in a thickness direction (the first direction) of the hinge mechanism are a size of a thickness of the first translation member and a size of a thickness of the second translation member. Synchronously, an axial direction of the rotating member is the thickness direction of the hinge mechanism. In other words, the rotating member is horizontally placed in the hinge mechanism. In this case, a size requirement of the rotating member in a thickness direction of the hinge mechanism is also a thickness of the rotating member along the axial direction. Compared with a case in which a requirement of the linkage structure in the thickness direction is at least an outer diameter of the linkage structure when a radial direction of the rotating member in the linkage structure is parallel to the thickness direction, the linkage structure provided in this embodiment of this application has an obvious reduction in a thickness requirement, and is adapted to flat space of the hinge mechanism. The linkage structure has a simple structure, small avoidance space, and a small thickness of the hinge mechanism.

In a possible implementation, the first swing arm includes a first rotating member and a first plate that are fastened to each other; the second swing arm includes a second rotating member and a second plate that are fastened to each other; the first rotating member and the second rotating member are located on two sides of the linkage structure along the direction of the rotation axis; the first plate and the second plate are located on two sides of the linkage structure along the second direction; and the first plate is capable of driving the first rotating member to rotate relative to the inner hinge, and the second plate is capable of driving the second rotating member to rotate relative to the inner hinge. The swing arm includes structures of the rotating member and the plate. This is simple in structure and easy to implement.

In a possible implementation, the first translation member includes a first concave portion that is concave away from the first rotating member, the first rotating member includes a first protrusion portion that protrudes toward the first translation member, and the first protrusion portion is connected to the first concave portion in a fitting manner, to drive the first translation member to move in a rotation process of the first rotating member.

In other words, the first protrusion portion is connected to the first concave portion in the fitting manner, so that the first rotating member drives the first translation member to move along the second direction. This manner of connecting the protrusion and the concave is simple in structure and occupies small space.

In a possible implementation, the second translation member includes a second concave portion that is concave away from the fourth rotating member, the fourth rotating member includes a second protrusion portion that protrudes toward the second translation member, and the second protrusion portion is connected to the second concave portion in a fitting manner, to drive the second translation member to move in a rotation process of the fourth rotating member.

In other words, the second protrusion portion is connected to the second concave portion in the fitting manner, so that the fourth rotating member drives the second translation member to move in the second direction. This manner of connecting the protrusion and the concave is simple in structure and occupies small space.

In a possible implementation, the first protrusion portion is located at an end that is of the first rotating member and that is away from the first swing arm, and the first concave portion is located at an end that is of the first translation member and that is close to the first swing arm.

In other words, the first protrusion portion is disposed at an inner end portion of the first rotating member, and the first concave portion is disposed at an outer end portion of the first translation member. In this way, in a folding process of the hinge mechanism, a movement amount of the first translation member is large, and full-angle rotation of the first rotating member is implemented through a delicate structure. In addition, a space requirement on the hinge mechanism in the second direction is small. This helps implement delicateness of the hinge mechanism.

In a possible implementation, the second protrusion portion is located at an end that is of the fourth rotating member and that is away from the second swing arm, and the second concave portion is located at an end that is of the second translation member and that is close to the second swing arm.

In other words, the second protrusion portion is disposed at an inner end portion of the fourth rotating member, and the second concave portion is disposed at an outer end portion of the second translation member. In this way, in the folding process of the hinge mechanism, a movement amount of the second translation member is large, and full-angle rotation of the fourth rotating member is implemented through a delicate structure. In addition, a space requirement on the hinge mechanism in the second direction is small. This helps implement delicateness of the hinge mechanism.

In a possible implementation, the first swing arm further includes a third rotating member, the third rotating member is fastened to the first plate, the third rotating member and the first rotating member are disposed opposite to each other on two sides of the linkage structure, and the first plate is also capable of driving the third rotating member to rotate relative to the inner hinge. The second swing arm further includes a fourth rotating member, the fourth rotating member is fastened to the second plate, the fourth rotating member and the second rotating member are disposed opposite to each other on two sides of the linkage structure, and the second plate is also capable of driving the fourth rotating member to rotate relative to the inner hinge.

In other words, each plate is connected to two rotating members, and the first swing arm and the second swing arm are symmetrically disposed. In this way, support stability of the plate is strong, and symmetry of a rotating mechanism is improved.

In a possible implementation, the rotating member includes a gear, the first rotating member includes a first rack, the second rotating member includes a second rack, and the first rack and the second rack separately mesh with the gear.

In other words, the gear and the rack are in transmission matching, so that the first translation member and the second translation member rotate synchronously. The meshing transmission structure has a simple structure, occupies small space, and transmission is stable.

In a possible implementation, a first guiding portion is disposed on a side that is of the inner hinge and that faces the linkage structure, and the first guiding portion is capable of guiding the first translation member to move in a direction parallel to the second direction.

The first guiding portion is disposed, so that the first translation member can move in a balanced and stable straight line along the second direction.

In a possible implementation, a second guiding portion is disposed on a side that is of the inner hinge and that faces the linkage structure, and the second guiding portion is capable of guiding the second translation member to move in a direction parallel to the second direction.

The second guiding portion is disposed, so that the second translation member can move in a balanced and stable straight line along the second direction.

In a possible implementation, the first guiding portion includes a first guiding groove and a first guiding protrusion that extend along the second direction, and the first guiding groove and the first guiding protrusion are sequentially disposed along the second direction.

A part of the first guiding portion is the first guiding groove, and a part of the first guiding portion is the first guiding protrusion. This can avoid a case in which rigidity of the inner hinge is affected because the inner hinge is excessively thinned at a position at which the first conductive portion is disposed.

In a possible implementation, the first guiding groove is disposed close to the first plate, and is adjacent to the first rotating member; and the first guiding protrusion is disposed close to the second plate, and is adjacent to the second rotating member.

In other words, the first guiding portion in an area in which the first protrusion in the first rotating member moves is correspondingly disposed as the first guiding groove, to avoid the first protrusion. In this way, blocking impact caused by the first guiding portion on movement of the first protrusion can be reduced.

In a possible implementation, the second guiding portion includes a second guiding groove and a second guiding protrusion that extend along the second direction, and the second guiding groove and the second guiding protrusion are sequentially disposed along the second direction.

A part of the second guiding portion is the second guiding groove, and a part of the second guiding portion is the second guiding protrusion. This can avoid a case in which rigidity of the inner hinge is affected because the inner hinge is excessively thinned at a position at which the second conductive portion is disposed.

In a possible implementation, the second guiding groove is disposed close to the second plate, and is adjacent to the fourth rotating member; and the second guiding protrusion is disposed close to the first plate, and is adjacent to the third rotating member.

In other words, the second guiding portion in an area in which the second protrusion in the fourth rotating member moves is correspondingly disposed as the second guiding groove, to avoid the second protrusion. In this way, blocking impact caused by the second guiding portion on movement of the second protrusion can be reduced.

In a possible implementation, a first limiting portion and a second limiting portion are disposed on the side that is of the inner hinge and that faces the linkage structure; the first limiting portion and the second limiting portion are located on two sides of the rotating member along the second direction; and surfaces that are of the first limiting portion and the second limiting portion and that face the rotating member are arc-shaped surfaces, and are slidably connected to the rotating member.

In this way, the first limiting portion and the second limiting portion match a rotation track of the rotating member, and the rotating member is limited between the first limiting portion and the second limiting portion, to limit the rotation track of the rotating member.

In a possible implementation, a surface that is of the inner hinge and that is away from the rotating assembly is a plane.

After the hinge mechanism is used in the electronic device, a display of the electronic device is disposed on the surface of the inner hinge. The surface of the inner hinge is disposed as the plane, so that planar support can be provided for the hinge mechanism in a whole folding process for the hinge mechanism. This can protect the display, and improve reliability of the display.

In a possible implementation, the hinge mechanism further includes the outer hinge, where the inner hinge is connected to the outer hinge; a first arc-type protrusion portion and a second arc-type protrusion portion are respectively provided on a side facing the first rotating member and a side facing the second rotating member and that are of the inner hinge, and a first arc-type concave portion and a second arc-type concave portion are respectively provided on a side facing the first rotating member and a side facing the second rotating member that are of the outer hinge; the first arc-type protrusion portion and the first arc-type concave portion enclose a first arc-type groove, and the second arc-type protrusion portion and the second arc-type concave portion enclose a second arc-type groove; and the first rotating member is capable of moving in the first arc-type groove, and the second rotating member is capable of moving in the second arc-type groove.

In other words, both the first rotating member and the second rotating member move in arc-type grooves. In this case, the first rotating member and the second rotating member rotate around an axis center of the first arc-type groove and an axis center of the second arc-type groove respectively, and rotation is stable and deviation is small.

In a possible implementation, a third arc-type protrusion portion and a fourth arc-type protrusion portion are respectively provided on a side facing third rotating member and a side facing the fourth rotating member that are of the inner hinge, and a third arc-type concave portion and a fourth arc-type concave portion are provided on the outer hinge; the third arc-type protrusion portion and the third arc-type concave portion enclose a third arc-type groove, and the fourth arc-type protrusion portion and the fourth arc-type concave portion enclose a fourth arc-type groove; and the third rotating member is capable of moving in the third arc-type groove, and the fourth rotating member is capable of moving in the fourth arc-type groove.

In other words, both the third rotating member and the fourth rotating member move in arc-type grooves. In this case, the third rotating member and the fourth rotating member rotate around an axis center of the third arc-type groove and an axis center of the fourth arc-type groove respectively, and rotation is stable and deviation is small.

In a possible implementation, the rotating assembly further includes a first damping member, and the first damping member is slidably connected to a side of the second rotating member and a side of the third rotating member that are away from the linkage structure; and when the first swing arm drives the third rotating member to rotate and the second swing arm drives the second rotating member to rotate, the first damping member is configured to apply resistance to the first swing arm and the second swing arm.

The first damping member is disposed in the rotating assembly. When the first swing arm and the second swing arm rotate, resistance is applied to the first swing arm and the second swing arm through the first damping member, so that the first swing arm and the second swing arm can hover when the first swing arm and the second swing arm rotate relative to the inner hinge. When the hinge mechanism is used in the electronic device, because a first housing is fastened to the first swing arm, and a second housing is fastened to the second swing arm, a hover requirement in a folding process of the electronic device can be met, and user experience can be improved.

In a possible implementation, a first cam and a second cam are respectively provided on a side of the third rotating member and a side of the second rotating member that are away from the linkage structure; the first damping member includes a first conjoined cam, a first elastic portion, and a first pin shaft; the first conjoined cam is sleeved on an end that is of the first pin shaft and that is close to the linkage structure, and meshes with the first cam and the second cam; and the first conjoined cam is rotatably mounted on the first pin shaft, and the first elastic portion is sleeved on the first pin shaft.

In this manner of in which the cam meshes with and abuts against the cam, the first damping member may apply resistance at a plurality of different degrees, and the resistance may be adjusted based on a requirement, to meet a hover requirement for the hinge mechanism at a plurality of angles.

In a possible implementation, the rotating assembly further includes a fifth rotating member and a sixth rotating member that are located on a side that is of the first damping member and that is away from the linkage structure; and the fifth rotating member and the sixth rotating member are disposed side by side along the second direction, an end that is of the fifth rotating member and that is away from the sixth rotating member is connected to the first swing arm, an end that is of the sixth rotating member and that is away from the fifth rotating member is connected to the second swing arm, and the fifth rotating member and the sixth rotating member are capable of separately rotating relative to the inner hinge.

In other words, each swing arm may be connected to a plurality of rotating members, and the plurality of rotating members are properly arranged, so that the swing arm is subjected to uniform force and rotates smoothly.

In a possible implementation, the first swing arm further includes a fifth rotating member, the fifth rotating member is fastened to the first plate, the fifth rotating member and the third rotating member are disposed opposite to each other on two sides of the first damping member, and the first plate is also capable of driving the fifth rotating member to rotate relative to the inner hinge. The second swing arm further includes a sixth rotating member, the sixth rotating member is fastened to the second plate, the sixth rotating member and the second rotating member are disposed opposite to each other on two sides of the first damping member, and the second plate is also capable of driving the sixth rotating member to rotate relative to the inner hinge.

In other words, the plate in the swing arm is supported by a plurality of rotating members. This can improve stability of the plate.

In a possible implementation, the rotating assembly further includes a second damping member; the second damping member is slidably connected to a side of the fifth rotating member and a side of the sixth rotating member that are close to the first damping member; and when the first swing arm drives the fifth rotating member to rotate and the second swing arm drives the sixth rotating member to rotate, the second damping member is configured to apply resistance to the first swing arm and the second swing arm.

In other words, the rotating assembly may include a plurality of damping members, and the plurality of damping members synchronously apply resistance to the swing arm at a plurality of positions and angles, to improve stability of hovering for the swing arm.

In a possible implementation, along a direction from a first side to a second side, the hinge mechanism includes a plurality of rotating assemblies spaced from each other.

In other words, a quantity and layout of the rotating assemblies in the hinge mechanism may be flexibly adjusted with reference to a shape of the electronic device, to meet requirements in different application scenarios.

In a possible implementation, the hinge mechanism further includes a decorative cover, and the decorative cover is located on a side that is of the rotating assembly and that is away from the inner hinge, and is connected to the inner hinge.

The decorative cover is disposed, internal structures of the hinge mechanism can be hidden regardless of whether the hinge mechanism is in the folded state or the flattened state. This improves appearance aesthetics of the hinge mechanism.

According to a second aspect of embodiments of this application, an electronic device is provided, including a first housing, a second housing, a flexible display, and the hinge mechanism according to any one of the first aspect, where the first housing is detachably connected to a first swing arm, and the second housing is detachably connected to a second swing arm; and the first housing includes a first surface, the second housing includes a second surface, the hinge mechanism includes a third surface located on a side that is of an inner hinge and that is away from a rotating assembly, the flexible display continuously covers the first surface, the third surface, and the second surface, and the flexible display is separately fastened to the first surface of the first housing and the second surface of the second housing.

In a possible implementation, the hinge mechanism includes a decorative cover; when the electronic device is flattened, the decorative cover is hidden in the first housing and the second housing; and when the electronic device is folded, the decorative cover is exposed outside the first housing and the second housing, to fill a gap between the first housing and the second housing.

In other words, regardless of whether the electronic device is in a folded state or in the flattened state, the first housing and the second housing each are seamlessly closed when seen from an appearance of the electronic device. This further improves appearance beauty of the display device.

In a possible implementation, the electronic device includes a mobile terminal, for example, may be a foldable mobile phone, a foldable tablet, a foldable notebook, or a foldable e-book.

### BRIEF DESCRIPTION OF DRAWINGS

FIG. 1 is a diagram of a foldable structure of an electronic device according to an embodiment of this application;
FIG. 2 is a diagram of another foldable structure of an electronic device according to an embodiment of this application;
FIG. 3 is a diagram of a structure of a hinge mechanism according to an embodiment of this application;
FIG. 4A is a diagram of a state of a hinge mechanism in a flattened state according to an embodiment of this application;
FIG. 4B is a diagram of a state of a hinge mechanism in a folded state according to an embodiment of this application;
FIG. 5 is an exploded view of a hinge mechanism according to an embodiment of this application;
FIG. 6 is a diagram of a structure of a rotating assembly according to an embodiment of this application;
FIG. 7 is a diagram of a structure of a rotating member and a plate according to an embodiment of this application;
FIG. 8 is a partial enlarged diagram of a linkage structure according to an embodiment of this application;
FIG. 9A is a diagram of a process of matching between a translation member and a rotating member according to an embodiment of this application;
FIG. 9B is a diagram of another process of matching between a translation member and a rotating member according to an embodiment of this application;
FIG. 9C is a diagram of still another process of matching between a translation member and a rotating member according to an embodiment of this application;
FIG. 10 is a diagram of a state of a first damping member of a hinge mechanism being in a flattened state according to an embodiment of this application;
FIG. 11 is a structural diagram of a damping principle of the first damping member that is shown in FIG. 10 and that is of a hinge mechanism being in a flattened state according to an embodiment of this application;
FIG. 12 is a diagram of a state of a first damping member of a hinge mechanism being in a folded state according to an embodiment of this application;
FIG. 13 is a structural diagram of a damping principle of the first damping member shown in FIG. 12 according to an embodiment of this application;
FIG. 14 is a structural diagram of a damping principle of a first damping member of a hinge mechanism being in a middle angle state according to an embodiment of this application;
FIG. 15 is a diagram of a structure of an inner hinge according to an embodiment of this application;
FIG. 16 is a diagram of a structure of an inner hinge and a rotating assembly that are in a flattened state after being assembled according to an embodiment of this application;
FIG. 17 is a diagram of a structure of an inner hinge and a rotating assembly that are in a folded state after being assembled according to an embodiment of this application;
FIG. 18 is a diagram of a structure of an inner hinge according to an embodiment of this application;
FIG. 19A is a diagram of a structure of an outer hinge according to an embodiment of this application;
FIG. 19B is a diagram of matching between an inner hinge, an outer hinge, and a damping member according to an embodiment of this application;
FIG. 20 is a diagram of a structure of an assembled inner hinge, rotating assembly, and outer hinge according to an embodiment of this application;
FIG. 21 is an exploded diagram of an electronic device according to an embodiment of this application;
FIG. 22 is a diagram of a use state of an electronic device according to an embodiment of this application;
FIG. 23 is a diagram of another use state of an electronic device according to an embodiment of this application; and
FIG. 24 is a diagram of still another use state of an electronic device according to an embodiment of this application.

Reference numerals:
1-electronic device;
11-first housing; 12-second housing; 13-third housing; 14-first hinge mechanism; 15-second hinge mechanism;
2-hinge mechanism;
20-inner hinge;
21-first arc-type protrusion portion; 22-second arc-type protrusion portion; 23-third arc-type protrusion portion; 24-fourth arc-type protrusion portion; 25-fifth arc-type protrusion portion; 26-sixth arc-type protrusion portion; 27-hinge segment; 20a-first opening for assembly; 20b-end appearance member; 20c-first guiding portion; 20c1-first guiding groove; 20c2-first guiding protrusion; 20d-second guiding portion; 20e-first limiting portion; 20f-second limiting portion; 20h-first matching portion; 20h1-first cam matching portion; 20h2-first elastic member matching portion; 20i-second matching portion; 20j-first connection portion;
30-outer hinge;
31-first arc-type concave portion; 32-second arc-type concave portion; 33-third arc-type concave portion; 34-fourth arc-type concave portion; 35-fifth arc-type concave portion; 36-sixth arc-type concave portion; 30a-second opening for assembly; 30b-end matching member; 30c-first translation member matching portion; 30d-second translation member matching portion; 30e-third limiting portion; 30f-fourth limiting portion; 30h-third matching portion; 30i-fourth matching portion; 30j-second connection portion;
U1-first arc-type groove; U2-second arc-type groove;
40-rotating assembly;
40A-first swing arm; 40B-second swing arm; 41-first rotating member; 411-first protrusion portion; 42-second rotating member; 421-second protrusion portion; 422-second cam; 43-third rotating member; 431-first cam; 44-fourth rotating member; 45-first plate; 46-second plate; 47-linkage structure; 471-first translation member; 471a-groove; 4711-first concave portion; 472-second translation member; 472a-groove; 4721-second concave portion; 473-rotating member; 48-fifth rotating member; 49-sixth rotating member; 40a-third opening for assembly;
50-decorative cover;
60-first damping member;
61-first conjoined cam; 62-first elastic portion; 63-first pin shaft; 64-first gasket; 65-second gasket;
70-second damping member;
3-display;
301-first part; 302-second part; 303-third part; 304-fourth part; and 305-fifth part.

### DESCRIPTION OF EMBODIMENTS

The following describes technical solutions in embodiments of this application with reference to accompanying drawings in embodiments of this application. It is clear that the described embodiments are only a part rather than all of embodiments of this application.

The terms such as "first" and "second" below are only for ease of description, and cannot be construed as indicating or implying relative importance or implicitly indicating a quantity of indicated technical features. Therefore, a feature limited by "first", "second", or the like may explicitly or implicitly include one or more features. In the descriptions of this application, unless otherwise stated, "a plurality of" means two or more than two.

In addition, in embodiments of this application, orientation terms such as "upper", "lower", "left", and "right" may include but are not limited to definitions based on illustrated orientations in which components in the accompanying drawings are placed. It should be understood that, these directional terms may be relative concepts. They are used for description and clarification of relative positions, and may vary accordingly depending on a change in the orientations in which the components in the accompanying drawings are placed in the accompanying drawings.

In embodiments of this application, unless otherwise clearly specified and limited, a term "connection" should be understood in a broad sense. For example, the "connection" may be a fixed connection, a detachable connection, or an integrated connection, or may be a direct connection or an indirect connection implemented through an intermediate medium. In addition, the term "coupling" may be a direct electrical connection, or may be an indirect electrical connection through an intermediate medium. The term "contact" may be direct contact or indirect contact through an intermediate medium.

In embodiments of this application, and/or describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects.

An embodiment of this application provides an electronic device. The electronic device is a device having a foldable screen function. For example, the electronic device is a consumer electronic product or a vehicle-mounted electronic product. The consumer electronic product is, for example, a mobile phone (mobile phone), a tablet (pad), a notebook computer, an e-reader, a personal computer (personal computer, PC), a personal digital assistant (personal digital assistant, PDA), a desktop display, an intelligent wearable product (for example, a smart watch, smart glasses, or a smart band), a virtual reality (virtual reality, VR) device, an augmented reality (augmented reality, AR) device, or a camera. The vehicle-mounted electronic product is, for example, a vehicle-mounted navigator, or a vehicle-mounted high-density digital video disc (digital video disc, DVD). A specific form of the electronic device is not specifically limited in embodiments of this application.

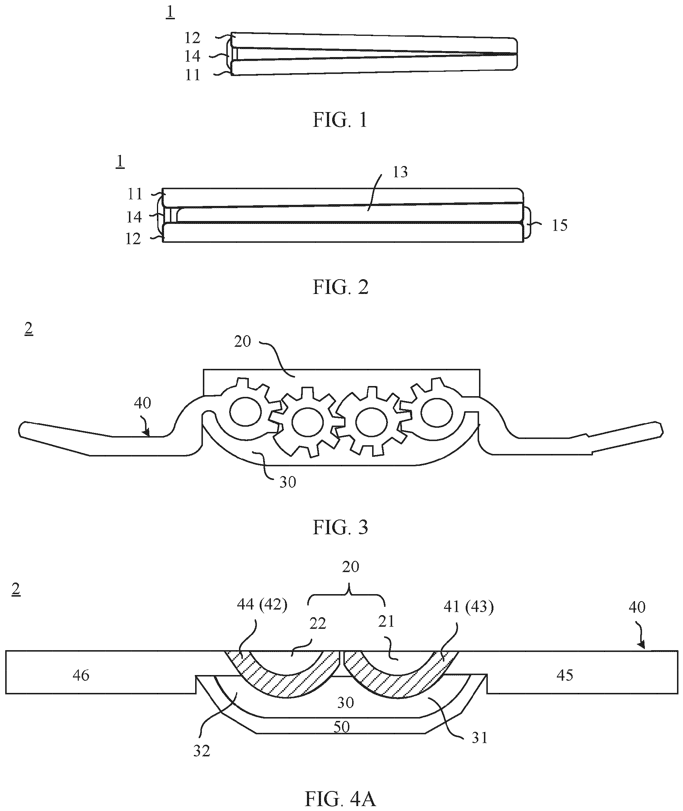

FIG. 1 and FIG. 2 each are a diagram of a foldable structure of an electronic device according to an embodiment of this application.

In some embodiments, as shown in FIG. 1, an electronic device 1 provided in this embodiment of this application is a two-fold foldable electronic device.

As shown in FIG. 1, the electronic device 1 includes a first housing 11, a second housing 12, and a first hinge mechanism 14, where the first housing 11 and the second housing 12 are spaced from each other, and the first hinge mechanism 14 is located between the first housing 11 and the second housing 12, and is connected to the first housing 11 and the second housing 12 separately.

The first housing 11 and/or the second housing 12 may be a middle frame structure of the electronic device 1. For example, the first housing 11 and/or the second housing 12 may form mounting space, and the mounting space is used for mounting components such as a battery, a circuit board, a camera, a headset, an earpiece, a button, and a battery of the electronic device. The circuit board may integrate electronic components such as a main controller, a storage unit, an antenna module, and a power management module of the electronic device. The battery may supply power to electronic components such as the circuit board, a receiver, a speaker, and the camera.

The first housing 11 and the second housing 12 may be equal in thickness, or may be unequal in thickness. This is not limited in embodiments of this application.

In a possible design, the mounting space may be provided in each of the first housing 11 and the second housing 12, to distribute the electronic components of the electronic device 1 in the housings on two sides.

In another possible design, the mounting space may be disposed only in the first housing 11, and the electronic components of the electronic device 1 are centrally distributed in the first housing 11. Alternatively, the first housing 11 and the second housing 12 each may be provided with the mounting space. However, most of the electronic components of the electronic device 1 are disposed in the first housing 11, and a small part of the electronic components are disposed in the second housing 12, so that the second housing 12 is lighter and more conveniently folded and unfolded.

In some other embodiments, as shown in FIG. 2, the electronic device 1 provided in this embodiment of this application is a triple-fold foldable electronic device.

As shown in FIG. 2, the electronic device 1 includes a first housing 11, a second housing 12, a third housing 13, a first hinge mechanism 14, and a second hinge mechanism 15.

The first housing 11 and the second housing 12 are spaced from each other, and the first hinge mechanism 14 is located between the first housing 11 and the second housing 12, and is connected to the first housing 11 and the second housing 12 separately. The second hinge mechanism 15 is located between the second housing 12 and the third housing 13, and is connected to the second housing 12 and the third housing 13 separately.

The first hinge mechanism 14 and the second hinge mechanism 15 are important components of the foldable electronic device, and sizes of the first hinge mechanism 14 and the second hinge mechanism 15 in a thickness direction of the electronic device 1 directly affect a thickness of the entire electronic device 1.

FIG. 3 is a diagram of a structure of a hinge mechanism according to an embodiment of this application.

In some embodiments, as shown in FIG. 3, a hinge mechanism 2 includes an inner hinge 20, an outer hinge 30, and a rotating assembly 40, where the rotating assembly 40 is located between the inner hinge 20 and the outer hinge 30, the rotating assembly 40 includes a plurality of gears that mesh with each other sequentially, and an axial direction of the gear is parallel to a rotation axis of the hinge mechanism 2.

The thickness of the hinge mechanism 2 is affected by a diameter of the gear and cannot be small. This affects the overall thickness of the electronic device 1, and fails to meet a requirement for lightness and thinness.

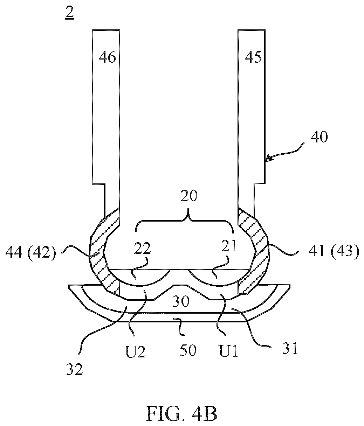

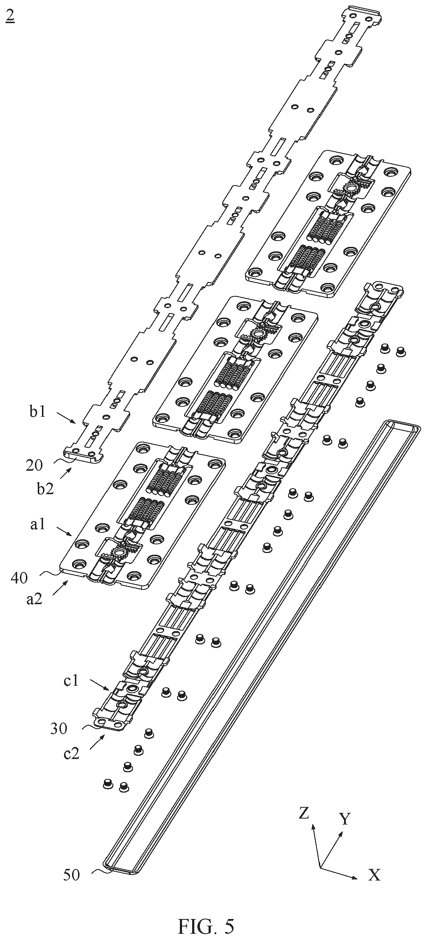

FIG. 4A and FIG. 4B are cross-sectional diagrams of a hinge mechanism in two different states according to this application. FIG. 4A is a diagram of a state of the hinge mechanism being in a flattened state, and FIG. 4B is a diagram of a state of the hinge mechanism being in a folded state. FIG. 5 is an exploded view of a hinge mechanism according to an embodiment of this application.

An embodiment of this application provides a hinge mechanism 2. Refer to FIG. 4A, FIG. 4B, and FIG. 5. The hinge mechanism 2 provided in this embodiment of this application includes an inner hinge 20 and a rotating assembly 40. In some embodiments, the hinge mechanism 2 further includes an outer hinge 30 and a decorative cover 50. The inner hinge 20, the rotating assembly 40, the outer hinge 30, and the decorative cover 50 are sequentially disposed along a thickness direction (a first direction Z) of the hinge mechanism 2.

As shown in FIG. 5, a direction in which the inner hinge 20, the rotating assembly 40, the outer hinge 30, and the decorative cover 50 are stacked is the thickness direction of the hinge mechanism 2. In this embodiment of this application, the thickness direction of the hinge mechanism 2 is referred to as the first direction Z, a length direction of the hinge mechanism 2 (namely, a direction of a rotation axis of the hinge mechanism 2) is referred to as a third direction Y, and a width direction of the hinge mechanism 2 is referred to as a second direction X. The first direction Z is perpendicular to an extension direction Y of the hinge.

The inner hinge 20 and the outer hinge 30 are disposed separately and are detachably connected. For example, the inner hinge 20 and the outer hinge 30 are connected by using a screw. The rotating assembly 40 is located on the inner hinge 20 and the outer hinge 30 and is provided with openings for assembly. The rotating assembly 40 is located between the inner hinge 20 and the outer hinge 30, and matched openings for assembly are also disposed on the rotating assembly 40. An assembly manner shown in FIG. 5 is only an example, and is not limited. The inner hinge 20 and the outer hinge 30 are disposed separately, so that the rotating assembly 40 can be conveniently disposed, assembled and connected.

For the rotating assembly 40 included in the hinge mechanism 2, the rotating assembly 40 is disposed between the inner hinge 20 and the outer hinge 30. In some embodiments, along the third direction Y, one rotating assembly 40 provided in this embodiment of this application may be disposed, or a plurality of rotating assemblies 40 provided in this embodiment of this application may be disposed. FIG. 5 shows only an example in which three rotating assemblies 40 are disposed between the inner hinge 20 and the outer hinge 30.

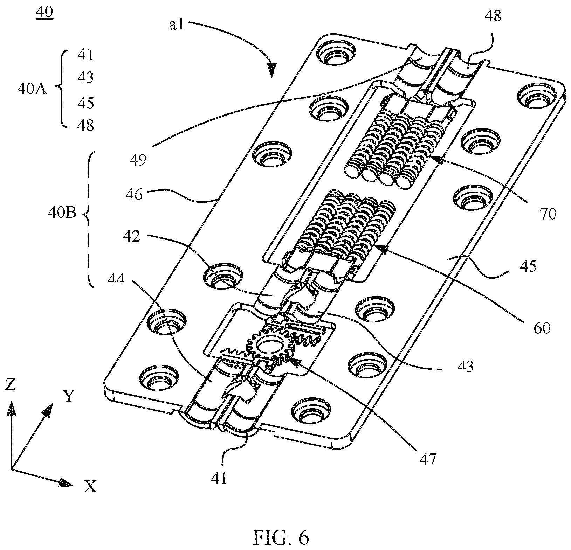

FIG. 6 is a diagram of a structure of a rotating assembly according to an embodiment of this application.

In some embodiments, as shown in FIG. 6, a rotating assembly 40 includes a first swing arm 40A, a second swing arm 40B, and a linkage structure 47.

The first swing arm 40A and the second swing arm 40B can rotate oppositely or back to each other along a rotation axis of a hinge mechanism 2, so that the hinge mechanism 2 switches between a flattened state and a folded state. For example, from a perspective of FIG. 6, the hinge mechanism 2 is in the flattened state. When the first swing arm 40A and the second swing arm 40B rotate relative to each other, the hinge mechanism 2 may be switched to the folded state. On the contrary, when the hinge mechanism 2 is in the folded state, the first swing arm 40A and the second swing arm 40B rotate back to each other, so that the hinge mechanism 2 can be switched to the flattened state.

The rotation axis of the hinge mechanism 2 is parallel to a third direction Y, and the rotation axis of the hinge mechanism 2 is, for example, a center line of the hinge mechanism 2.

In some embodiments, the first swing arm 40A includes a first rotating member 41 and a first plate 45, and the first rotating member 41 is fastened to the first plate 45. For example, the first rotating member 41 and the first plate 45 are of an integrated structure.

The second swing arm 40B includes a second rotating member 42 and a second plate 46. The second rotating member 42 is fastened to the second plate 46. For example, the second rotating member 42 and the second plate 46 are of an integrated structure.

The first rotating member 41 and the second rotating member 42 are located on two sides of the linkage structure 47 along the third direction Y. For example, the first rotating member 41 and the second rotating member 42 may be symmetrically disposed on two opposite sides of the linkage structure 47, or the first rotating member 41 and the second rotating member 42 may be disposed on two opposite sides of the linkage structure 47 along a diagonal.

The first plate 45 and the second plate 46 are located on two sides of the linkage structure 47 along a second direction X. For example, the first plate 45 and the second plate 46 may be symmetrically disposed on the two sides of the linkage structure 47.

The first plate 45 can drive the first rotating member 41 to rotate relative to an inner hinge 20, so that the first swing arm 40A rotates relative to the inner hinge 20. The second plate 46 can drive the second rotating member 42 to rotate relative to the inner hinge 20, so that the second swing arm 40B rotates relative to the inner hinge 20.

Still refer to FIG. 6. In some embodiments, the first swing arm 40A further includes a third rotating member 43, and the third rotating member 43 is fastened to the first plate 45. For example, the third rotating member 43 and the first plate 45 are of an integrated structure.

The third rotating member 43 and the first rotating member 41 are disposed opposite to each other on two sides of the linkage structure 47. When the hinge mechanism 2 is in the flattened state, the third rotating member 43 and the second rotating member 42 are disposed side by side along the second direction X, and are located on a second side of the linkage structure 47.

The first rotating member 41 includes a first end and a second end, and the fourth rotating member 44 includes a first end and a second end. When the hinge mechanism 2 is in the flattened state, the first end of the first rotating member 41 and the first end of the fourth rotating member 44 are disposed adjacent to each other, the second end that is of the first rotating member 41 and that is away from the fourth rotating member 44 is connected to the first plate 45, and the second end that is of the fourth rotating member 44 and that is away from the first rotating member 41 is connected to the second plate 46.

The second swing arm 40B further includes the fourth rotating member 44, and the fourth rotating member 44 is fastened to the second plate 46. For example, the fourth rotating member 44 and the second plate 46 are of an integrated structure.

The fourth rotating member 44 and the second rotating member 42 are disposed opposite to each other on two sides of the linkage structure 47. When the hinge mechanism 2 is in the flattened state, the first rotating member 41 and the fourth rotating member 44 are disposed side by side along the second direction X, and are located on a first side of the linkage structure 47.

The third rotating member 43 includes a first end and a second end, and the second rotating member 42 includes a first end and a second end. When the hinge mechanism 2 is in a flattened state, the first end of the third rotating member 43 and the first end of the second rotating member 42 are disposed adjacent to each other, the second end that is of the third rotating member 43 and that is away from the second rotating member 42 is connected to the first plate 45, and the second end that is of the second rotating member 42 and that is away from the third rotating member 43 is connected to the second plate 46.

The first plate 45 can also drive the third rotating member 43 to rotate relative to the inner hinge 20, and the second plate 46 can also drive the fourth rotating member 44 to rotate relative to the inner hinge 20. The first rotating member 41, the second rotating member 42, the third rotating member 43, and the fourth rotating member 44 can rotate relative to the inner hinge 20 separately. In some embodiments, the first rotating member 41 and the third rotating member 43 rotate synchronously, and the fourth rotating member 44 and the second rotating member 42 rotate synchronously.

For example, when the hinge mechanism 2 rotates from the flattened state to the folded state, the first rotating member 41 and the third rotating member 43 rotate counterclockwise from the state shown in FIG. 4A to the state shown in FIG. 4B. Synchronously, the second rotating member 42 and the fourth rotating member 44 rotate clockwise from the state shown in FIG. 4A to the state shown in FIG. 4B.

When the hinge mechanism 2 rotates from the folded state to the flattened state, the first rotating member 41 and the third rotating member 43 rotate clockwise from the state shown in FIG. 4B to the state shown in FIG. 4A. Synchronously, the second rotating member 42 and the fourth rotating member 44 rotate counterclockwise from the state shown in FIG. 4B to the state shown in FIG. 4A.

In some embodiments, as shown in FIG. 6, the first swing arm 40A further includes a fifth rotating member 48, and the fifth rotating member 48 is fastened to the first plate 45. For example, the fifth rotating member 48 and the first plate 45 are of an integrated structure.

The second swing arm 40B further includes a sixth rotating member 49, and the sixth rotating member 49 is fastened to the second plate 46. For example, the sixth rotating member 49 and the second plate 46 are of an integrated structure.

The fifth rotating member 48 is disposed on a side that is of the third rotating member 43 and that is away from the linkage structure 47, and the sixth rotating member 49 is disposed on a side that is of the second rotating member 42 and that is away from the linkage structure 47. When the hinge mechanism 2 is in the flattened state, the fifth rotating member 48 and the sixth rotating member 49 are disposed side by side along the second direction X.

An end that is of the fifth rotating member 48 and that is away from the sixth rotating member 49 is connected to the first plate 45, and the first plate 45 can also drive the fifth rotating member 48 to rotate relative to the inner hinge 20. An end that is of the sixth rotating member 49 and that is away from the fifth rotating member 48 is connected to the second plate 46, and the second plate 46 can also drive the sixth rotating member 49 to rotate relative to the inner hinge 20.

In some embodiments, the first plate 45 drives the first rotating member 41, the third rotating member 43, and the fifth rotating member 48 to rotate synchronously, and the second plate 46 drives the second rotating member 42, the fourth rotating member 44, and the sixth rotating member 49 to rotate synchronously.

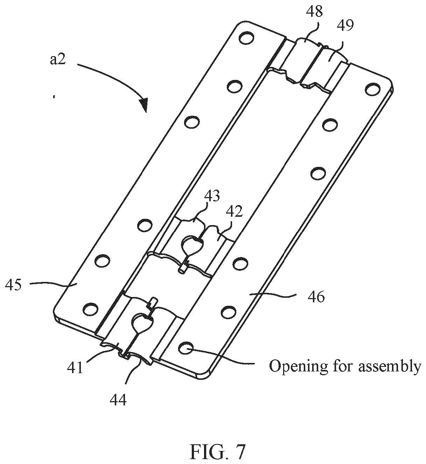

FIG. 7 is a diagram of a structure of a rotating member and a plate according to an embodiment of this application.

In some embodiments, as shown in FIG. 7, the first rotating member 41, the third rotating member 43, the fifth rotating member 48, and the first plate 45 are of an integrated structure, and the fourth rotating member 44, the second rotating member 42, the sixth rotating member 49, and the second plate 46 are of an integrated structure.

In some embodiments, an opening for assembly is reserved on each of the first rotating member 41, the third rotating member 43, the fifth rotating member 48, the first plate 45, the second rotating member 42, the fourth rotating member 44, the sixth rotating member 49, and the second plate 46. A shape and a setting position of the opening for assembly are not limited in embodiments of this application, and are set with reference to an assembly status of the hinge mechanism 2. The opening for hole-shaped assembly shown in FIG. 7 is only an example, and is not limited.

In some embodiments, as shown in FIG. 7, the first plate 45 and the second plate 46 are sheet-like structures, and the first plate 45 and the second plate 46 extend out of convex parts to connect to rotating members. Certainly, a gap may be further disposed on the first plate 45 and the second plate 46, to meet requirements in different application scenarios.

Refer to FIG. 6 and FIG. 7. In some embodiments, an upper surface a1 and a lower surface a2 are provided on the rotating assembly 40, where the upper surface a1 is a surface that is of the rotating assembly 40 and that faces the inner hinge 20, and the lower surface a2 is a surface that is of the rotating assembly 40 and that faces the outer hinge 30. FIG. 6 and FIG. 7 are respectively shown from an upper surface a1 side and a lower surface a2 side of the rotating assembly 40.

The following describes a structure of the linkage structure 47 by using an example.

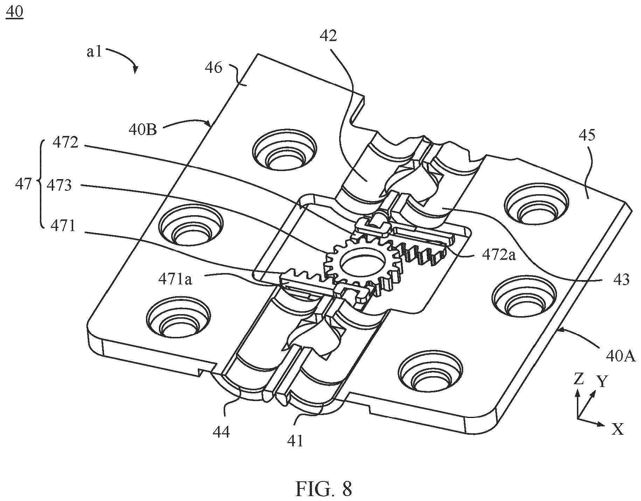

FIG. 8 is a partial enlarged diagram of a linkage structure according to an embodiment of this application.

As shown in FIG. 8, in some embodiments, the linkage structure 47 includes a rotating member 473, a first translation member 471, and a second translation member 472.

The first translation member 471 is slidably connected relative to the inner hinge 20 and is clamped relative to the first swing arm 40A, the second translation member 472 is slidably connected relative to the inner hinge 20 and is clamped relative to the second swing arm 40B, the rotating member 473 is connected to the first translation member 471 and the second translation member 472, and is rotatably connected relative to the inner hinge 20. A rotation axis of the rotating member 473 is parallel to the first direction Z.

When the first swing arm 40A rotates, the first translation member 471 is driven to slide along a direction parallel to the second direction X. When the second swing arm 40B rotates, the second translation member 472 is driven to slide along a direction parallel to the second direction X. In addition, regardless of whether the first swing arm 40A and the second swing arm 40B rotate relative to each other or back to each other, sliding directions of the first translation member 471 and the second translation member 472 are always opposite. For example, in a process in which the hinge mechanism 2 is switched from the flattened state to the folded state, the first swing arm 40A and the second swing arm 40B rotate relative to each other along the rotation axis of the hinge mechanism, to drive the first translation member 471 and the second translation member 472 to slide reversely along directions parallel to the second direction X. Similarly, in a process in which the hinge mechanism 2 is switched from the folded state to the flattened state, the first swing arm 40A and the second swing arm 40B rotate relative to each other along the rotation axis of the hinge mechanism, to drive the first translation member 471 and the second translation member 472 to slide reversely along directions parallel to the second direction X. When the first translation member 471 and the second translation member 472 slide, the rotating member 473 may be driven to rotate, and the rotating member 473 may synchronize sliding of the first translation member 471 and the second translation member 472.

The rotation axis of the rotating member 473 is parallel to the first direction Z, or it is understood that the rotating member 473 rotates in a plane parallel to the second direction X and the third direction Y.

In some embodiments, the first translation member 471 is located on a side that is of the rotating member 473 and that is close to the first rotating member 41, the first translation member 471 is connected to the first rotating member 41, and the first rotating member 41 can drive the first translation member 471 to slide along the direction parallel to the second direction X. The first plate 45 drives the first rotating member 41 to rotate, to drive the first translation member 471 to slide, so that the first swing arm 40A drives the first translation member 471 to slide.

The second translation member 472 is located on a side that is of the rotating member 473 and that is close to the second rotating member 42, the second translation member 472 is connected to the second rotating member 42, and the second rotating member 42 can drive the second translation member 472 to slide along the direction parallel to the second direction X. The second plate 46 drives the second rotating member 42 to rotate, to drive the second translation member 472 to slide, so that the second swing arm 40B drives the second translation member 472 to slide.

For example, when the hinge mechanism 2 rotates from the flattened state to the folded state, in a perspective shown in FIG. 8, the first plate 45 drives the first rotating member 41 to rotate counterclockwise, and the first rotating member 41 drives the first translation member 471 to move from left to right. The second plate 46 drives the second rotating member 42 to rotate clockwise, and the second rotating member 42 drives the second translation member 472 to move from right to left.

When the hinge mechanism 2 rotates from the folded state to the flattened state, the first plate drives the first rotating member 41 to rotate clockwise, and the first rotating member 41 drives the first translation member 471 to move from right to left. The second plate 46 drives the second rotating member 42 to rotate counterclockwise, and the second rotating member 42 drives the second translation member 472 to move from left to right.

In a rotation process of the hinge mechanism 2, the first rotating member 41 and the second rotating member 42 always rotate in a reverse direction of the clock track, to drive the first translation member 471 and the second translation member 472 to always move in parallel and reverse direction.

The following describes a manner of connecting the first translation member 471 to the first rotating member 41 and a manner of connecting the second translation member 472 to the second rotating member 42.

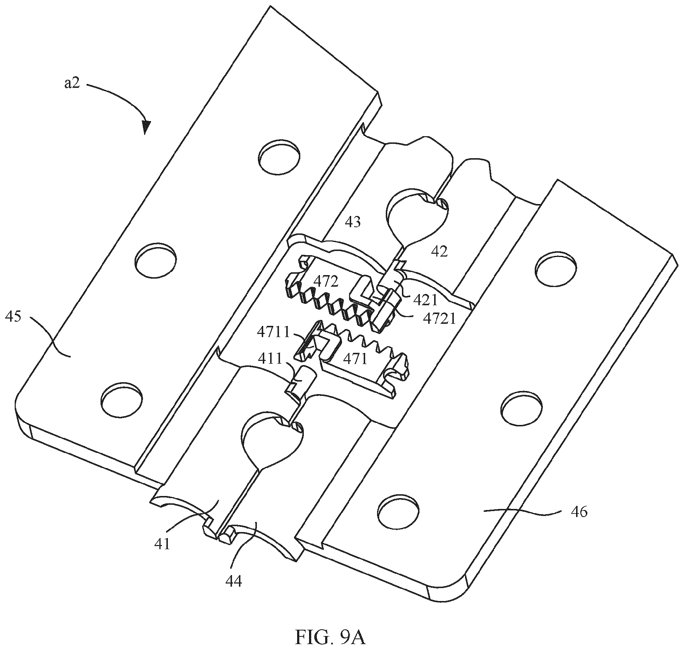

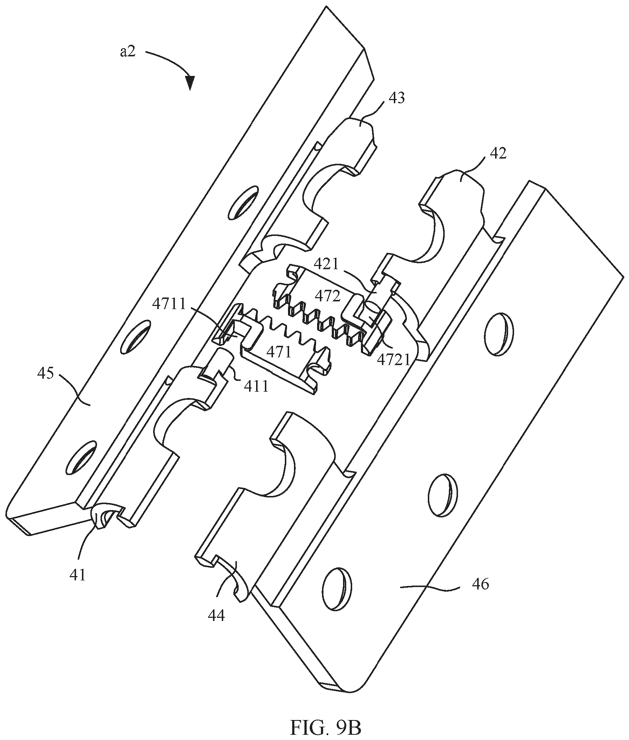

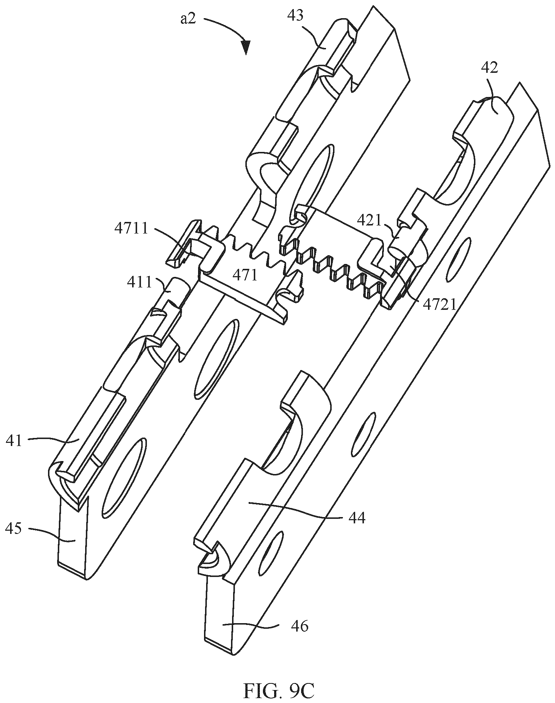

FIG. 9A, FIG. 9B, and FIG. 9C each are a diagram of a process of matching between a translation member and a rotating member according to an embodiment of this application.

As shown in FIG. 9A, in some embodiments, the first translation member 471 includes a first concave portion 4711 that is concave away from the first rotating member 41, and the first rotating member 41 includes a first protrusion portion 411 that protrudes toward the first translation member 471. The first protrusion portion 411 extends into the first concave portion 4711, and is connected to the first concave portion 4711 in a fitting manner, to drive the first translation member 471 to slide in a rotation process of the first rotating member 41.

The first protrusion portion 411 and another part of the first translation member 471 may be an integrated structure, or the first protrusion portion 411 and another part of the first translation member 471 may be a discrete structure that is fastened. This is not limited in embodiments of this application.

A specific structure of the first protrusion portion 411 is not limited in embodiments of this application. The first protrusion portion 411 may be a regular structure, or may be an irregular structure. For example, the first protrusion portion 411 is a pin shaft, and the first concave portion 4711 is a groove matching the pin shaft.

After the first protrusion portion 411 is clamped to the first concave portion 4711, a surface of the first protrusion portion 411 may be in contact with an inner wall of the first concave portion 4711, or a gap may be reserved. This is not limited in embodiments of this application.

A structure in which the first protrusion portion 411 matches the first concave portion 4711 is used to implement mechanical connection between the first translation member 471 and the first rotating member 41. The structure is simple, the process is simple. This is easy to implement.

As shown in FIG. 9A, in some embodiments, the first protrusion portion 411 is located at an end that is of the first rotating member 41 and that is away from the first plate 45. When the hinge mechanism 2 is in the flattened state, the first protrusion portion 411 is disposed close to the fourth rotating member 44 and protrudes toward the first translation member 471.

Correspondingly, the first concave portion 4711 is located at an end that is of the first translation member 471 and that is close to the first plate 45, and a main part of the first translation member 471 is located at an end that is of the first concave portion 4711 and that is close to the second plate 46.

Based on this structure, from a perspective of FIG. 9A, in a folding process of the hinge mechanism 2, the first plate 45 drives the first rotating member 41 to rotate counterclockwise, to drive the first translation member 471 to move from a side on which the second plate 46 is located to a side on which the first plate 45 is located. As shown in FIG. 9B, as the hinge mechanism 2 rotates, the first translation member 471 slides gradually. As shown in FIG. 9C, when the hinge mechanism 2 is rotated to the folded state, the first translation member 471 slides to the side close to the first plate 45.

The first protrusion portion 411 is disposed on an inner end portion of the first rotating member 41, and the first concave portion 4711 is disposed on an outer end portion of the first translation member 471, so that the first translation member 471 can move a large amount in a process of folding the hinge mechanism 2, and full-angle rotation of the first rotating member 41 is implemented through a delicate structure. In addition, a space requirement on the hinge mechanism 2 in the second direction X is small. This helps implement delicateness of the hinge mechanism 2.

Correspondingly, in some embodiments, as shown in FIG. 9A, the second translation member 472 includes a second concave portion 4721 that is concave away from the second rotating member 42, and the second rotating member 42 includes a second protrusion portion 421 that protrudes toward the second translation member 472. The second protrusion portion 421 extends into the second concave portion 4721, and is connected to the second concave portion 4721 in a fitting manner, to drive the second translation member 472 to slide in a rotation process of the second rotating member 42.

The second protrusion portion 421 and another part of the second translation member 472 may be an integrated structure, or the second protrusion portion 421 and another part of the second translation member 472 may be a discrete structure that is fastened. This is not limited in embodiments of this application.

A specific structure of the second protrusion portion 421 is not limited in embodiments of this application. The second protrusion portion 421 may be a regular structure, or may be an irregular structure. For example, the second protrusion portion 421 is a pin shaft, and the second concave portion 4721 is a groove matching the pin shaft.

After the second protrusion portion 421 is clamped to the second concave portion 4721, a surface of the second protrusion portion 421 may be in contact with an inner wall of the second concave portion 4721, or a gap may be reserved. This is not limited in embodiments of this application.

A structure in which the second protrusion portion 421 matches the second concave portion 4721 is used to implement mechanical connection between the second translation member 472 and the second rotating member 42. The structure is simple, the process is simple. This is easy to implement.

As shown in FIG. 9A, in some embodiments, the second protrusion portion 421 is located at an end that is of the second rotating member 42 and that is away from the second plate 46, and the second concave portion 4721 is located at an end that is of the second translation member 472 and that is close to the second plate 46. When the hinge mechanism 2 is in the flattened state, the second protrusion portion 421 is disposed close to the third rotating member 43 and protrudes toward the second translation member 472.

Correspondingly, the second concave portion 4721 is located at an end that is of the second translation member 472 and that is close to the second plate 46, and a main part of the second translation member 472 is located at an end that is of the second concave portion 4721 and that is close to the first plate 45.

Based on this structure, from the perspective of FIG. 9A, in a folding process of the hinge mechanism 2, the second plate 46 drives the second rotating member 42 to rotate clockwise, to drive the second translation member 472 to move from the side where the first plate 45 is located to the side where the second plate 46 is located. As shown in FIG. 9B, as the hinge mechanism 2 rotates, the second translation member 472 slides gradually. As shown in FIG. 9C, when the hinge mechanism 2 is rotated to the folded state, the second translation member 472 slides to the side close to the second plate 46.

The second protrusion portion 421 is disposed on an inner end portion of the second rotating member 42 and the second concave portion 4721 is disposed on an outer end portion of the second translation member 472, so that the second translation member 472 can move a large amount in a process of folding the hinge mechanism 2, and full-angle rotation of the second rotating member 42 is implemented through a delicate structure. In addition, a space requirement on the hinge mechanism 2 in the second direction X is small. This helps implement delicateness of the hinge mechanism 2.

As shown in FIG. 9A, in some embodiments, the rotating member 473 includes a gear, the first translation member 471 includes a first rack, the second translation member 472 includes a second rack, and the first rack and the second rack are separately configured to mesh with the gear.

A structure in which the gear matches the rack is used to implement synchronization of the rotating member with the first translation member 471 and the second translation member 472. The structure is simple and easy to implement.

According to the hinge mechanism 2 provided in embodiments of this application, the linkage structure 47 includes the first translation member 471, the second translation member 472, and the rotating member 473. The first translation member 471 and the second translation member 472 always move along a width direction (the second direction X) of the hinge mechanism 2, and size requirements of the first translation member 471 and the second translation member 472 in a thickness direction (the first direction Z) of the hinge mechanism 2 are a size of a thickness of the first translation member 471 and a size of a thickness of the second translation member 472. Synchronously, an axial direction of the rotating member 473 is the thickness direction of the hinge mechanism 2. In other words, the rotating member 473 is horizontally placed in the hinge mechanism 2. In this case, a size requirement of the rotating member 473 in a thickness direction of the hinge mechanism 2 is also a thickness of the rotating member 473 along the axial direction. Compared with a case in which a requirement of the linkage structure in the thickness direction is at least an outer diameter of the linkage structure when a radial direction of the rotating member in the linkage structure is parallel to the first direction Z, the linkage structure 47 provided in this embodiment of this application has an obvious reduction in a thickness requirement, and is adapted to flat space of the hinge mechanism 2. The linkage structure 47 has a simple structure, small avoidance space, and a small thickness of the hinge mechanism 2.

When the hinge mechanism 2 provided in this application is folded, the hinge mechanism 2 may need to hover at an angle, to improve user experience. In some embodiments, the hinge mechanism 2 provided in this application further includes a damping structure. For example, when the hinge mechanism 2 is in the flattened state, a flattening force needs to be applied to the first plate 45 and the second plate 46 through the damping structure, so that the hinge mechanism 2 remains in the flattened state. For another example, when the hinge mechanism 2 is in a closed state, a closing force needs to be applied to the first plate 45 and the second plate 46 through the damping structure, so that the hinge mechanism 2 remains in the closed state.

Refer to FIG. 6. In some embodiments, the rotating assembly 40 further includes a first damping member 60, the first damping member 60 is located on a side that is of the second rotating member 42 and the third rotating member 43 and that is away from the linkage structure 47, and the first damping member 60 abuts against the second rotating member 42 and the third rotating member 43.

Alternatively, it is understood that the first damping member 60 is located between the second rotating member 42 and the third rotating member 43, and the fifth rotating member 48 and the sixth rotating member 49.

When the first plate 45 drives the third rotating member 43 to rotate and the second plate 46 drives the second rotating member 42 to rotate, the first damping member 60 is configured to apply resistance to the first plate 45 and the second plate 46. For example, the first damping member 60 applies resistance to the first plate 45 through the third rotating member 43, so that the first plate 45 hovers at a position. The first damping member 60 synchronously applies resistance to the second plate 46 through the second rotating member 42, so that the second plate 46 hovers at a position.

The first damping member 60 is disposed in the rotating assembly 40. When the first plate 45 and the second plate 46 rotate, resistance is applied to the first plate 45 and the second plate 46 through the first damping member 60, so that the first plate 45 and the second plate 46 can hover when the first plate 45 and the second plate 46 rotate relative to the inner hinge 20. When the hinge mechanism 2 is used in the electronic device 1, because the first housing 11 is fastened to the first plate 45, and the second housing 12 is fastened to the second plate 46, a hover requirement in a folding process of the electronic device 1 can be met, and user experience can be improved.

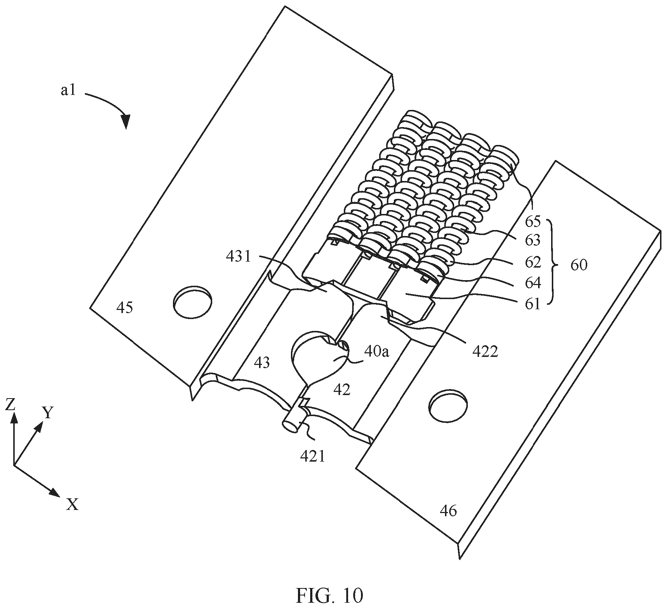

FIG. 10 is a diagram of a state of a first damping member of a hinge mechanism being in a flattened state according to an embodiment of this application.

In some embodiments, as shown in FIG. 10, a first cam 431 and a second cam 422 are respectively provided on a side of the third rotating member 43 and a side of the second rotating member 42 that are away from the second protrusion portion 421 (or the linkage structure 47).

Synchronously, the first damping member 60 includes a first conjoined cam 61, a first elastic portion 62, and a first pin shaft 63.

The first conjoined cam 61 is rotatably mounted at an end that is of the first pin shaft 63 and that is close to the second protrusion portion 421 (or the linkage structure 47), and meshes with the first cam 431 and the second cam 422. The first elastic portion 62 is sleeved on the first pin shaft 63, and is located on a side that is of the first conjoined cam 61 and that is away from the first cam 431 and the second cam 422.

In some embodiments, the first pin shaft 63 includes a shaft portion and an end portion, the shaft portion of the first pin shaft 63 extends along a third direction Y, and the first conjoined cam 61 is slidably disposed at an end that is of the shaft portion and that is away from the end portion. A diameter of the shaft portion is less than a diameter of the first elastic portion 62, and the first elastic portion 62 is sleeved on the shaft portion. A diameter of the end portion is greater than the diameter of the first elastic portion 62, and the first elastic portion 62 is limited between the first conjoined cam 61 and the end portion.

An elastic deformation direction of the first elastic portion 62 is parallel to an extension direction of the first pin shaft 63. When the first elastic portion 62 is elastically deformed, a reverse elastic force along the third direction Y can be applied to the first conjoined cam 61. For example, the first elastic portion 62 is in a compressed state when the first elastic portion 62 is assembled into the first damping member 60.

The first damping member 60 may include one or more first pin shafts 63, and the first elastic portion 62 is sleeved on each first pin shaft 63. In FIG. 10, an example in which the first damping member 60 includes four first pin shafts 63 is used for illustration.

The plurality of first pin shafts 63 are disposed, first conjoined cams 61 that are connected may be driven to move in a balanced and stable manner. In addition, because the first elastic portion 62 is disposed on each first pin shaft 63, a large squeezing force may be applied to the first cam 431 and the second cam 422, so that the first plate 45 and the second plate 46 are stably at a hover position. This improves opening and closing experience in an intermediate state.

When the first plate 45 rotates, the third rotating member 43 drives the first cam 431 to rotate, and the first cam 431 slides relative to the first conjoined cam 61, to apply squeezing force to the first conjoined cam 61. The first conjoined cam 61 slides toward a side on which the first elastic portion 62 is located, to apply a damping force to the first elastic portion 62. The elastic characteristic of the first elastic portion 62 applies resistance to the first plate 45 through a reverse path, so that the first plate 45 hovers at a position.

Synchronously, when the second plate 46 rotates, a damping force is applied to the first elastic portion 62, and the first elastic portion 62 applies resistance to the second plate 46 through a reverse path, so that the second plate 46 hovers at a position.

Still refer to FIG. 10. In some embodiments, the first damping member 60 further includes a first gasket 64 and a second gasket 65. The first gasket 64 and the second gasket 65 are respectively disposed at two ends of the first elastic portion 62, and the first gasket 64 and the second gasket 65 are sleeved on the first pin shaft 63.

For example, the first gasket 64 is disposed between the first elastic portion 62 and the first conjoined cam 61, and the second gasket 65 is disposed between the first elastic portion 62 and a tail end of the first pin shaft 63.

In some embodiments, the first damping member 60 includes a plurality of first pin shafts 63, the first gasket 64 sleeved on the plurality of first pin shafts 63 may be a discrete structure, or may be an integrated structure, and the second gasket 65 sleeved on the plurality of first pin shafts 63 may be a discrete structure, or may be an integrated structure.

The first gasket 64 and the second gasket 65 are respectively disposed at two ends of the first elastic portion 62, so that the first pin shaft and the first conjoined cam can be evenly subjected to a force.

In some embodiments, the first elastic portion 62 is, for example, a spring. The spring is used as the first elastic portion 62. The structure is simple, and costs are low.

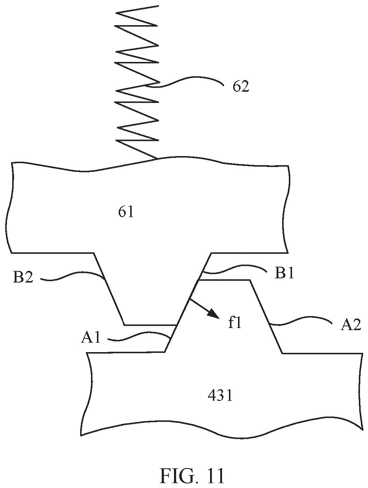

FIG. 11 is a structural diagram of a damping principle of the first damping member 60 that is shown in FIG. 10 and that is of a hinge mechanism being in a flattened state according to an embodiment of this application.

As shown in FIG. 11, an end that is of the first cam 431 and that is close to the first conjoined cam 61 has a first damping surface A1 and a second damping surface A2 that are opposite to the first conjoined cam 61, and the first conjoined cam 61 has a third damping surface B1 and a fourth damping surface B2 that are opposite to the first cam 431. With reference to FIG. 10 and FIG. 11, when the third rotating member 43 drives the first cam 431 to rotate to a first position, the first damping surface A1 abuts against the third damping surface B1, and the first elastic portion 62 is in an energy storage state, so that a squeezing force f1 on the first cam 431 is generated, and the squeezing force f1 may enable the first cam 431 to generate a flattening force. In this way, because the first cam 431 is connected to the first plate 45, the first plate 45 is subject to the flattening force applied by the first cam 431, and the first plate 45 keeps a hoveringly flattened state under an action of the flattening force.

Synchronously, an end that is of the second cam 422 and that is close to the first conjoined cam 61 has a fifth damping surface and a sixth damping surface, and the first conjoined cam 61 has a seventh damping surface and an eighth damping surface that are opposite to the second cam 422. When the second rotating member 42 drives the second cam 422 to rotate to the first position, the fifth damping surface abuts against the seventh damping surface, and the first elastic portion 62 is in an energy storage state, so that a squeezing force on the second cam 422 is generated, and the squeezing force may enable the second cam 422 to generate a flattening force. In this way, because the second cam 422 is connected to the second plate 46, the second plate 46 is subject to the flattening force applied by the second cam 422, and the second plate 46 keeps a hoveringly flattened state under an action of the flattening force.

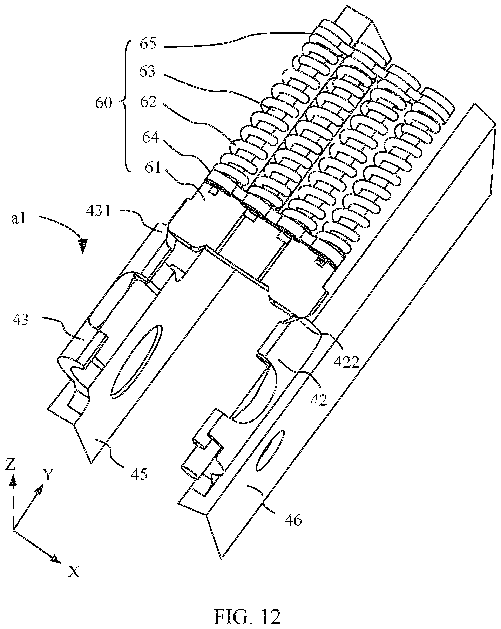

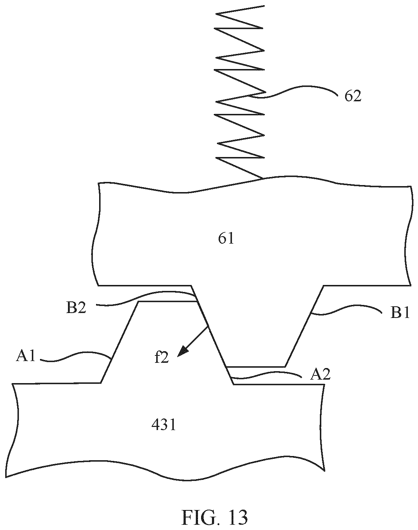

FIG. 12 is a diagram of a state of a first damping member of a hinge mechanism being in a folded state according to an embodiment of this application. FIG. 13 is a structural diagram of a damping principle of the first damping member shown in FIG. 12 according to an embodiment of this application.

When the third rotating member 43 drives the first cam 431 to rotate to a second position, the second damping surface A2 abuts against the fourth damping surface B2, and the first elastic portion 62 is in an energy storage state, so that a squeezing force f2 on the first cam 431 is generated, and the squeezing force f2 may enable the first cam 431 to generate a folding force. In this way, because the first cam 431 is connected to the first plate 45, the first plate 45 is subject to the folding force applied by the first cam 431, and the first plate 45 keeps a hoveringly folded state under an action of the folding force.

Synchronously, when the second rotating member 42 drives the second cam 422 to rotate to the second position, the sixth damping surface abuts against the eighth damping surface, and the first elastic portion 62 is in an energy storage state, so that a squeezing force on the second cam 422 is generated, and the squeezing force may enable the second cam 422 to generate a folding force. In this way, because the second cam 422 is connected to the second plate 46, the second plate 46 is subject to a folding force applied by the second cam 422, and the second plate 46 keeps a hoveringly folded state under an action of the folding force.

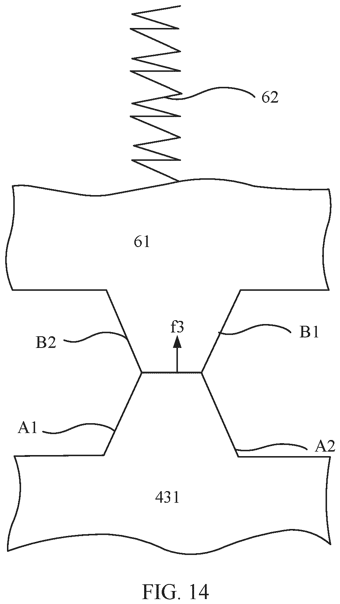

FIG. 14 is a structural diagram of a damping principle of a first damping member of a hinge mechanism being in a middle angle state according to an embodiment of this application.

As shown in FIG. 14, when the third rotating member 43 drives the first cam 431 to rotate to a third position between the first position and the second position, a convex surface of the first cam 431 abuts against a convex surface of the first conjoined cam 61, and the first elastic portion 62 is in an energy storage state, so that a squeezing force f3 on the first cam 431 is generated, and the squeezing force f3 may enable the first cam 431 to generate a retention force. In this way, because the first cam 431 is connected to the first plate 45, the first plate 45 is subject to the retention force applied by the first cam 431, and the first plate 45 keeps a hoveringly middle angle state between the folded state and the flattened state under an action of the retention force.

Synchronously, when the second rotating member 42 drives the second cam 422 to rotate to the third position between the first position and the second position, a convex surface of the second cam 422 abuts against a convex surface of the first conjoined cam 61, and the first elastic portion 62 is in an energy storage state, so that a squeezing force is generated on the second cam 422, and the squeezing force may enable the second cam 422 to generate a retention force. In this way, because the second cam 422 is connected to the second plate 46, the second plate 46 is subject to the retention force applied by the second cam 422, and the second plate 46 keeps a hoveringly middle angle state of the folded state and the flattened state under an action of the retention force.

The first conjoined cam 61 abuts against the first cam 431 and the second cam 422, the first plate 45 and the second plate 46 each may be subjected to a damping force at the same time when rotating, so that the first plate 45 and the second plate 46 each are symmetrically at a hover position.

Certainly, in some embodiments, the first damping member 60 does not include the first conjoined cam 61, but includes a third cam and a fourth cam. The third cam abuts against the first cam 431, and the fourth cam abuts against the second cam 422. Damping principles of the third cam and the first cam 431 are the same as principles shown in FIG. 11 and FIG. 13, and damping principles of the fourth cam and the second cam 422 are also the same as the principles shown in FIG. 11 and FIG. 13.

In this case, the first damping member 60 includes at least two first pin shafts 63. One first pin shaft 63 is slidably connected to the third cam, and the other first pin shaft 63 is slidably connected to the fourth cam.

In some embodiments, the first swing arm 40A does not include the third rotating member 43, a second cam 422 is disposed on a side that is of the second rotating member 42 and that is away from the second protrusion portion 421, and the first damping member 60 abuts against the second cam 422 to apply resistance to the second plate 46.

Still refer to FIG. 6. In some embodiments, the rotating assembly 40 further includes a second damping member 70.

The second damping member 70 is slidably connected to a side of the fifth rotating member 48 and a side of the sixth rotating member 49 that are close to the first damping member 60. When the first plate 45 drives the fifth rotating member 48 to rotate and the second plate 46 drives the sixth rotating member 49 to rotate, the second damping member 70 is configured to apply resistance to the first plate 45 and the second plate 46.

In some embodiments, a structure of the second damping member 70 is the same as a structure of the first damping member 60, and a manner in which the second damping member 70 abuts against the fifth rotating member 48 and the sixth rotating member 49 is the same as a manner in which the first damping member 60 abuts against the third rotating member 43 and the second rotating member 42. For details, refer to the foregoing related descriptions. Details are not described herein again.

For example, a fifth cam and a sixth cam are respectively provided on a side of the fifth rotating member 48 and a side of the sixth rotating member 49 that face the first damping member 60.

Synchronously, the second damping member 70 includes a second conjoined cam, a second elastic portion, and a second pin shaft.

The second conjoined cam is sleeved on an end that is of the second pin shaft and that is away from the first damping member 60, and abuts against the fifth cam and the sixth cam. The second elastic portion is sleeved on the second pin shaft, and is located on a side that is of the second conjoined cam and that is away from the fifth cam and the sixth cam.

In this embodiment of this application, the inner hinge 20 and the outer hinge 30 that are included in the hinge mechanism 2 further include a structure matching the rotating assembly 40.

Refer to FIG. 4A and FIG. 4B. In some embodiments, a first arc-type protrusion portion 21 and a second arc-type protrusion portion 22 are respectively disposed on a side facing the first rotating member 41 and a side facing the second rotating member 42 that are of the inner hinge 20, and a first arc-type concave portion 31 and a second arc-type concave portion 32 are respectively disposed on a side facing the first rotating member 41 and a side facing the second rotating member 42 that are of the outer hinge 30.

The first arc-type protrusion portion 21 and the first arc-type concave portion 31 enclose a first arc-type groove U1, and the second arc-type protrusion portion 22 and the second arc-type concave portion 32 enclose a second arc-type groove U2. The first rotating member 41 can rotate in the first arc-type groove U1, and the second rotating member 42 can rotate in the second arc-type groove U2.

Based on this, in some embodiments, the first rotating member 41 and the second rotating member 42 are arc-shaped structures.

In this embodiment of this application, arc radiuses of the first arc-type protrusion portion 21, the second arc-type protrusion portion 22, the first arc-type concave portion 31, the second arc-type concave portion 32, the first rotating member 41, and the second rotating member 42 are not limited, and may be set based on a size of the hinge mechanism 2.

Synchronously, in some embodiments, a third arc-type protrusion portion and a fourth arc-type protrusion portion are respectively provided on a side facing the third rotating member 43 and a side facing the fourth rotating member 44 that are of the inner hinge 20, and a third arc-type concave portion and a fourth arc-type concave portion are provided on the outer hinge 30. The third arc-type protrusion portion and the third arc-type concave portion enclose a third arc-type groove, the fourth arc-type protrusion portion and the fourth arc-type concave portion enclose a fourth arc-type groove, the third rotating member 43 can rotate in the third arc-type groove, and the fourth rotating member 44 can rotate in the fourth arc-type groove.

In some embodiments, a fifth arc-type protrusion portion and a sixth arc-type protrusion portion are respectively provided on a side facing the fifth rotating member 48 and a side facing the sixth rotating member 49 that are of the inner hinge 20, and a fifth arc-type concave portion and a sixth arc-type concave portion are provided on the outer hinge 30. The fifth arc-type protrusion portion and the fifth arc-type concave portion enclose a fifth arc-type groove, the sixth arc-type protrusion portion and the sixth arc-type concave portion enclose a sixth arc-type groove, the fifth rotating member 48 can rotate in the fifth arc-type groove, and the sixth rotating member 49 can rotate in the sixth arc-type groove.

The first arc-type groove U1, the second arc-type groove U2, the third arc-type groove, the fourth arc-type groove, the fifth arc-type groove, the sixth arc-type groove, and the like may be a quarter of arc, one-third of arc, or the like. A person skilled in the art may adaptively adjust a specific parameter of the arc-type groove based on an actual requirement. This is not specifically limited in this application.

In this embodiment of this application, the first rotating member 41 matches the first arc-type groove U1, the third rotating member 43 matches the third arc-type groove, and the fifth rotating member 48 matches the fifth arc-type groove, so that the first plate 45 rotates relative to the inner hinge 20. The second rotating member 42 matches the second arc-type groove U2, the fourth rotating member 44 matches the fourth arc-type groove, and the sixth rotating member 49 matches the sixth arc-type groove, so that the second plate 46 rotates relative to the inner hinge 20.

In some other embodiments, the first plate 45 and the inner hinge 20, and the second plate 46 and the inner hinge 20 may also be rotatably connected in another manner, for example, connected through a pin shaft. In this case, the first rotating member 41 and the fourth rotating member 44 may be, for example, pin shafts.

The following schematically describes structures of the inner hinge 20 and the outer hinge 30, and matching between the inner hinge 20 and the rotating assembly 40 and the outer hinge 30 and the rotating assembly 40.

Herein, the inner hinge 20 and matching between the inner hinge 20 and the rotating assembly 40 are first described.

In some embodiments, as shown in FIG. 5, the inner hinge 20 includes a first surface b1 away from the rotating assembly 40 and a second surface b2 facing the rotating assembly 40.

In some embodiments, the first surface b1 that is of the inner hinge 20 and that is away from the rotating assembly 40 is a plane.

After the hinge mechanism 2 is used in the electronic device 1, a display of the electronic device 1 is disposed on the first surface b1 of the inner hinge 20. The first surface b1 of the inner hinge 20 is set as a plane, so that planar support can be provided for the hinge mechanism 2 in a whole folding process for the hinge mechanism 2. This protects the display and improves screen reliability.

An outer contour structure of the inner hinge 20 shown in FIG. 5 is only an example, and is not limited. An outer profile of the inner hinge 20 matches the rotating assembly 40, the first plate 45 and the second plate 46 extend out of the outer side of the inner hinge 20, and the inner hinge 20 does not affect rotation of the first plate 45 and the second plate 46.

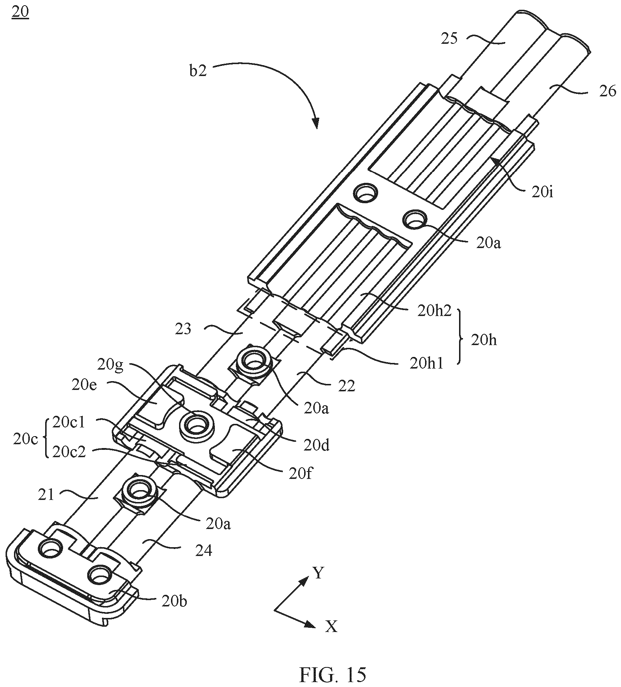

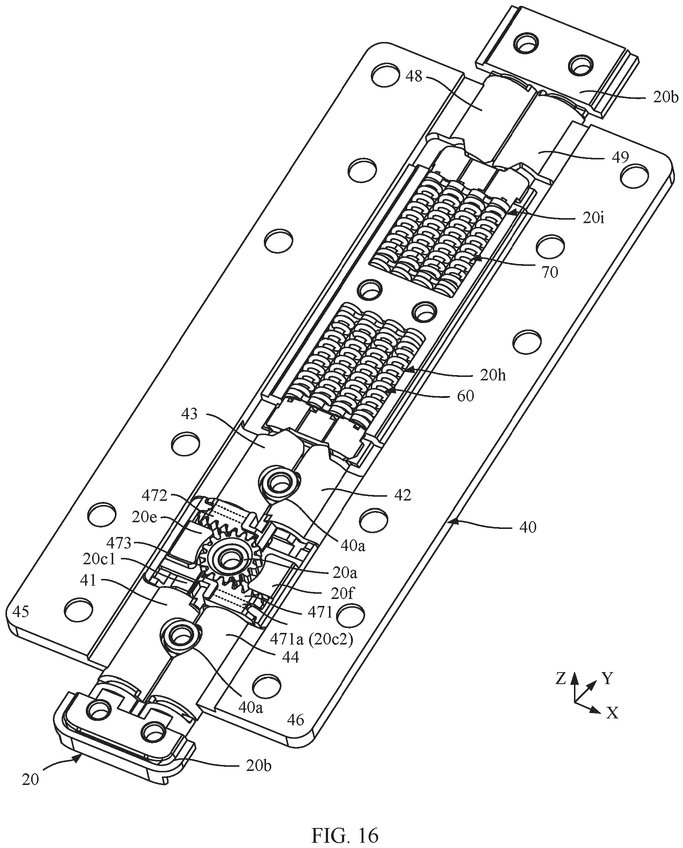

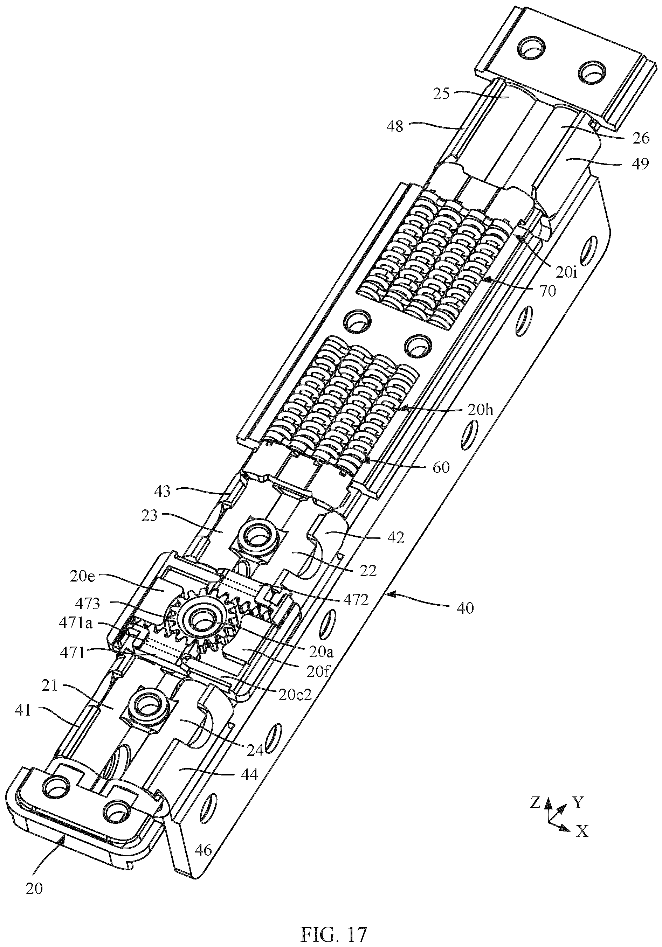

FIG. 15 is a diagram of a structure of an inner hinge according to an embodiment of this application. FIG. 16 is a diagram of a structure of an inner hinge and a rotating assembly that are in a flattened state after being assembled according to an embodiment of this application. FIG. 17 is a diagram of a structure of an inner hinge and a rotating assembly that are in a folded state after being assembled according to an embodiment of this application.

In some embodiments, with reference to FIG. 15, FIG. 16, and FIG. 17, a first arc-type protrusion portion 21 and a second arc-type protrusion portion 22 are provided on a second surface b2 that is of the inner hinge 20 and that faces the rotating assembly 40, a position and a shape of the first arc-type protrusion portion 21 match the first rotating member 41, and a position and a shape of the second arc-type protrusion portion 22 match the second rotating member 42.

A third arc-type protrusion portion 23 and a fourth arc-type protrusion portion 24 are also provided on the second surface b2 of the inner hinge 20, a position and a shape of the third arc-type protrusion portion 23 match the third rotating member 43, and a position and a shape of the fourth arc-type protrusion portion 24 match the fourth rotating member 44.

A fifth arc-type protrusion portion 25 and a sixth arc-type protrusion portion 26 are also provided on the second surface b2 of the inner hinge 20, a position and a shape of the fifth arc-type protrusion portion 25 match the fifth rotating member 48, and a position and a shape of the sixth arc-type protrusion portion 26 match the sixth rotating member 49.

In some embodiments, the inner hinge 20 further includes: a first opening 20a for assembly disposed between the first arc-type protrusion portion 21 and the second arc-type protrusion portion 22, and a first opening 20a for assembly disposed between the third arc-type protrusion portion 23 and the fourth arc-type protrusion portion 24. The first opening 20a for assembly is configured to be assembled and connected to the outer hinge 30. In the rotating assembly 40, a third opening 40a for assembly is disposed at corresponding positions of the first rotating member 41 and the fourth rotating member 44, and a third opening 40a for assembly is disposed at corresponding positions of the third rotating member 43 and the second rotating member 42. After the hinge mechanism 2 is assembled, the first opening 20a for assembly may extend into the third opening 40a for assembly.

In some embodiments, the inner hinge 20 further includes an end appearance member 20b, and the end appearance member 20b is connected to the first arc-type protrusion portion 21.

The end appearance member 20b is disposed, so that the end appearance member 20b in the internal structure of the hinge mechanism 2 may be blocked. Regardless of whether the hinge mechanism 2 is in the folded state or in the flattened state, the internal structure is hidden, and the entire structure has a complete appearance and good aesthetics.

In some embodiments, the other end of the inner hinge 20 is also provided with an end appearance member 20b. This is not shown in FIG. 15.

A structure and a shape of the end appearance member 20b are not limited in embodiments of this application. FIG. 15 is only an example.

Still refer to FIG. 15. In some embodiments, a first guiding portion 20c is disposed on a side of the second surface b2 that is of the inner hinge 20 and that faces the linkage structure 47, and the first guiding portion 20c can guide the first translation member 471 in the linkage structure 47 to move in a direction parallel to the second direction X.

In some embodiments, a second guiding portion 20d is disposed on the side of the second surface b2 that is of the inner hinge 20 and that faces the linkage structure 47, and the second guiding portion 20d can guide the second translation member 472 to move in a direction parallel to the second direction X.

The first guiding portion 20c and the second guiding portion 20d are disposed, so that the first translation member 471 and the second translation member 472 can move in a balanced and stable straight line along the second direction X.

In some embodiments, the first guiding portion 20c is a groove extending along the second direction X.

In some other embodiments, the first guiding portion 20c is a protrusion extending along the second direction X.

In some embodiments, as shown in FIG. 15, the first guiding portion 20c includes a first guiding groove 20c1 and a first guiding protrusion 20c2 that extend along the second direction X, and the first guiding groove 20c1 and the first guiding protrusion 20c2 are sequentially disposed along the second direction X.

The first guiding portion 20c is disposed in a structure in which a part of the first guiding groove 20c1 and a part of the first guiding protrusion 20c2 are disposed. This can avoid a case in which rigidity of the inner hinge 20 is affected because the inner hinge 20 is excessively thinned at a position at which the first conductive portion 20c is disposed, and can also avoid affecting the first rotating member 41 to drive the first translation member 471 to slide.

In this case, with reference to FIG. 8, FIG. 15, FIG. 16, and FIG. 17, a groove 471a is disposed on a side that is of the first translation member 471 and that faces the first guiding protrusion 20c2, and the first guiding protrusion 20c2 may extend into the groove 471a. The first guiding protrusion 20c2 matches the groove 471a. When the first translation member 471 moves along the second direction X, the groove 471a is sleeved on the first guiding protrusion 20c2 for sliding, and the first guiding protrusion 20c2 can guide the first translation member 471.

In some embodiments, the first guiding groove 20c1 is disposed close to the first plate 45, and the first guiding groove 20c1 is disposed adjacent to the first rotating member 41 (the first arc-type protrusion portion 21) along the third direction Y. The first guiding protrusion 20c2 is disposed close to the second plate 46, and the first guiding protrusion 20c2 is disposed adjacent to the fourth rotating member 44 (the fourth arc-type protrusion portion 24) along the third direction Y.

In this way, when the first rotating member 41 includes the first protrusion portion 411, the first guiding groove 20c1 does not affect rotation of the first protrusion portion 411.

In some embodiments, a surface of a groove arm that is of the first guiding groove 20c1 and that is close to the first arc-type protrusion portion 21 is a curved surface, and a track of the curved surface matches a rotation track of the first protrusion portion 411. In this way, the groove arm of the first guiding groove 20c1 may provide a support force for the first protrusion portion 411, to improve a firm force when the first protrusion portion 411 rotates, and avoid an impact on folding due to shaking of the first protrusion portion 411.

In some embodiments, a structure of the second guiding portion 20d is the same as a structure of the first guiding portion 20c.

For example, the second guiding portion 20d includes a second guiding groove and a second guiding protrusion that extend along the second direction X. For example, the second guiding groove is disposed close to the second plate 46 and adjacent to the second rotating member 42 (the second arc-type protrusion portion 22), and the second guiding protrusion is disposed close to the first plate 45 and adjacent to the third rotating member 43 (the third arc-type protrusion portion 23).

Correspondingly, as shown in FIG. 8, a groove 472a is disposed on a side of the first surface a1 that is of the second translation member 472 and that faces the first guiding portion 20c is located, and the second guiding protrusion may extend into the groove 472a.

Still refer to FIG. 15. In some embodiments, a first limiting portion 20e and a second limiting portion 20f are disposed on a side of the second surface b2 that is of the inner hinge 20 and that faces the linkage structure 47.

The first limiting portion 20e and the second limiting portion 20f are disposed between the first guiding portion 20c and the second guiding portion 20d. The first limiting portion 20e and the second limiting portion 20f are located on two sides of the inner hinge 20 along the second direction X. As shown in FIG. 16 and FIG. 17, after the rotating assembly 40 and the inner hinge 20 are assembled, the first limiting portion 20e and the second limiting portion 20f are located on two sides of the rotating member 473.

A surface that is of the first limiting portion 20e and that faces the second limiting portion 20f and a surface that is of the second limiting portion 20f and that faces the first limiting portion 20e each are an arc-shaped surface. In other words, a surface of the first limiting portion 20e and a surface of the second limiting portion 20f that face the rotating member 473 each are an arc-shaped surface. The first limiting portion 20e and the second limiting portion 20f match a rotation track of the rotating member 473, and the rotating member 473 is limited between the first limiting portion 20e and the second limiting portion 20f, to limit the rotation track of the rotating member 473.

An arc-shaped surface of the first limiting portion 20e and an arc-shaped surface of the second limiting portion 20f that face the rotating member 473 each may be a quarter of an arc-shaped surface, or may be one-third of an arc-shaped surface, or may be another arc-shaped surface.

In addition, shapes of the first limiting portion 20e and the second limiting portion 20f shown in FIG. 15 are only examples, and are not limited, provided that the surfaces that are of the first limiting portion 20e and the second limiting portion 20f and that face the rotating member 473 match the rotation track of the rotating member 473.

Still refer to FIG. 15 to FIG. 17. In some embodiments, the first opening 20a for assembly is disposed between the first limiting portion 20e and the second limiting portion 20f, and the rotating member 473 is sleeved on the first opening 20a for assembly.

An outer profile shape of the first opening 20a for assembly at the position matches a shape of a reserved hole of the rotating member 473. For example, the first opening 20a for assembly is a cylindrical hole. After an assembly screw extends into the first opening 20a for assembly, the rotating member 473 is sleeved on the assembly screw.

In some embodiments, a first matching portion 20h is disposed on a side of the second surface b2 that is of the inner hinge 20 and that faces the linkage structure 47, and the first damping member 60 is disposed to match the first matching portion 20h.

For example, the first matching portion 20h includes a first cam matching portion 20h1 and a first elastic member matching portion 20h2, the first cam matching portion 20h1 matches a shape of the first conjoined cam 61, the first elastic member matching portion 20h2 matches shapes of the first elastic portion 62 and the first pin shaft 63, and an end that is of the first pin shaft 63 and that is away from the first conjoined cam 61 abuts against the first elastic member matching portion 20h2.

In this embodiment of this application, an example in which the first damping member 60 includes four first elastic portions 62 is used for illustration. In a synchronous manner, an example in which the first elastic member matching portion 20h2 includes four grooves is used for illustration.

In some embodiments, a second matching portion 20i is disposed on a side of the second surface b2 that is of the inner hinge 20 and that faces the linkage structure 47, and the second damping member 70 is disposed to match the second matching portion 20i.

For a structure of the second matching portion 20i, refer to the first matching portion 20h. This is not limited in embodiments of this application.

In some embodiments, a first opening 20a for assembly is further disposed between the first matching portion 20h and the second matching portion 20i. Certainly, the first opening 20a for assembly on the inner hinge 20 is properly disposed based on a structure of the hinge mechanism 2.

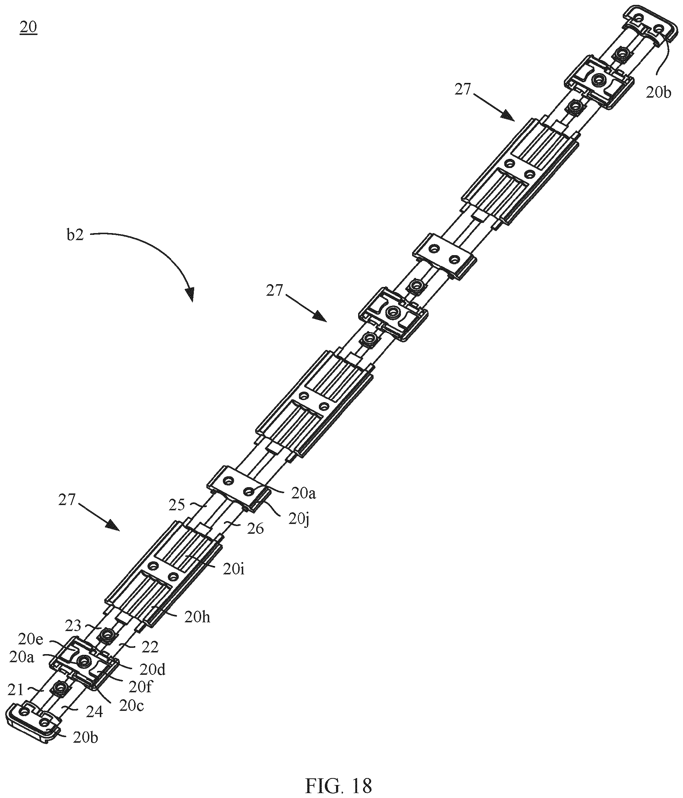

FIG. 18 is a diagram of a structure of an inner hinge according to an embodiment of this application.

FIG. 15 is a diagram of a structure of matching between the inner hinge 20 and one rotating assembly 40. When the hinge mechanism 2 includes a plurality of rotating assemblies 40, as shown in FIG. 18, the inner hinge 20 may include a plurality of hinge segments 27 that match the rotating assemblies 40.

In some embodiments, as shown in FIG. 18, the inner hinge 20 further includes first connection portions 20j, and two adjacent hinge segments 27 are connected through the first connection portion 20j. A structure of the first connection portion 20j is not limited in embodiments of this application, and is properly disposed with reference to a structure of the hinge mechanism 2.

For example, the first connection portion 20j includes a first opening 20a for assembly.

In some embodiments, first openings 20a for assembly on the inner hinge 20 are disposed in pairs. Alternatively, the first opening 20a for assembly on the inner hinge 20 is located on a central line of the inner hinge 20.

In this way, after the inner hinge 20 and the outer hinge 30 are assembled, a force applied at a position of the opening 20a for the first assembly is symmetrical to the entire hinge mechanism 2, to improve symmetry between the first plate 45 and the second plate 46.

The following schematically describes a structure of the outer hinge 30 and matching between the outer hinge 30 and the rotating assembly 40.

In some embodiments, as shown in FIG. 5, the outer hinge 30 includes a first surface c1 facing the rotating assembly 40 and a second surface c2 away from the rotating assembly 40.

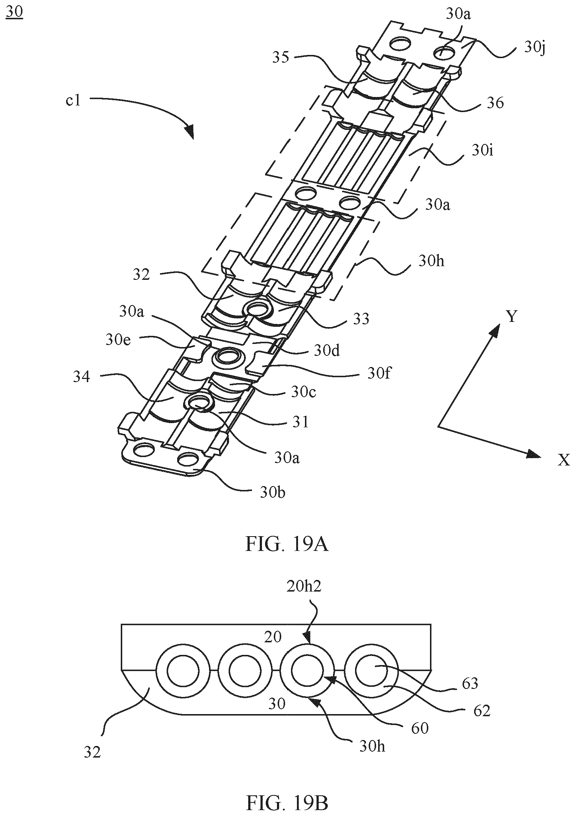

FIG. 19A is a diagram of a structure of an outer hinge according to an embodiment of this application.

In some embodiments, as shown in FIG. 19A, a first arc-type concave portion 31 and a second arc-type concave portion 32 are provided on the first surface c1 that is of the outer hinge 30 and that faces the rotating assembly 40, a position and a shape of the first arc-type concave portion 31 match the first rotating member 41, and a position and a shape of the second arc-type concave portion 32 match the second rotating member 42.

The first arc-type concave portion 31 and the first arc-type protrusion portion 21 are stacked to form a first arc-type groove, and the first rotating member 41 rotates in the first arc-type groove. The second arc-type concave portion 32 and the second arc-type protrusion portion 22 are stacked to form a second arc-type groove, and the second rotating member 42 rotates in the second arc-type groove.

A third arc-type concave portion 33 and a fourth arc-type concave portion 34 are also provided on the first surface c1 that is of the outer hinge 30 and that faces the rotating assembly 40, a position and a shape of the third arc-type concave portion 33 match the third rotating member 43, and a position and a shape of the fourth arc-type concave portion 34 match the fourth rotating member 44.

A fifth arc-type concave portion 35 and a sixth arc-type concave portion 36 are also provided on the first surface c1 of the outer hinge 30, a position and a shape of the fifth arc-type concave portion 35 match the fifth rotating member 48, and a position and a shape of the sixth arc-type concave portion 36 match the sixth rotating member 49.

In some embodiments, the outer hinge 30 further includes: a second opening 30a for assembly disposed between the first arc-type concave portion 31 and the fourth arc-type concave portion 34, and a second opening 30a for assembly disposed between the third arc-type concave portion 33 and the second arc-type concave portion 32. The second opening 30a for assembly is configured to be assembled and connected to the inner hinge 20.

In some embodiments, the outer hinge 30 further includes an end matching member 30b. The end matching member 30b is connected to the first arc-type concave portion 31 and the second arc-type concave portion 32, and is configured to match and assemble the end appearance member 20b of the inner hinge 20.

In some embodiments, a first translation member matching portion 30c and a second translation member matching portion 30d are disposed on a side of the first surface c1 that is of the outer hinge 30 and that faces the linkage structure 47. After the first translation member matching portion 30c is paired with the first conductive portion 20c, sufficient space is reserved for moving the first translation member 471. After the second translation member matching portion 30d is paired with the second conductive portion 20d, sufficient space is reserved for moving the second translation member 472.

For example, along the second direction X, a partial area of the first translation member matching portion 30c is a plane, and a partial area is a groove. Similarly, along the second direction X, a partial area of the second translation member matching portion 30d is a plane, and a partial area is a groove.

In some embodiments, a third limiting portion 30e and a fourth limiting portion 30f are disposed on the side of the first surface c1 that is of the outer hinge 30 and that faces the linkage structure 47.

The third limiting portion 30e and the fourth limiting portion 30f are disposed between the first translation member matching portion 30c and the second translation member matching portion 30d. Along the second direction X, the third limiting portion 30e and the fourth limiting portion 30f are located on two sides of the outer hinge 30. After the rotating assembly 40 and the outer hinge 30 are assembled, the third limiting portion 30e and the fourth limiting portion 30f are located on two sides of the rotating member 473.

A surface that is of the third limiting portion 30e and that faces the fourth limiting portion 30f and a surface that is of the fourth limiting portion 30f and that faces the third limiting portion 30e each are an arc-shaped surface. In other words, a surface of the third limiting portion 30e and a surface of the fourth limiting portion 30f that face the rotating member 473 are an arc-shaped surface. The third limiting portion 30e and the fourth limiting portion 30f match a rotation track of the rotating member 473, and the rotating member 473 is limited between the third limiting portion 30e and the fourth limiting portion 30f, to limit the rotation track of the rotating member 473.

An arc-shaped surface of the third limiting portion 30e and an arc-shaped surface of the fourth limiting portion 30f that face the rotating member 473 each may be a quarter of an arc-shaped surface, or may be one-third of an arc-shaped surface, or may be another arc-shaped surface.

In addition, shapes of the third limiting portion 30e and the fourth limiting portion 30f shown in FIG. 19A are only examples, and are not limited, provided that the surfaces that are of the third limiting portion 30e and the fourth limiting portion 30f and that face the rotating member 473 match the rotation track of the rotating member 473.

Still refer to FIG. 19A. In some embodiments, a second opening 30a for assembly is disposed between the third limiting portion 30e and the fourth limiting portion 30f, and the rotating member 473 (not shown in FIG. 19A) is sleeved on the second opening 30a for assembly.

An outer profile shape of the second opening 30a for assembly at the position matches a shape of a reserved hole of the rotating member 473. For example, the second opening 30a for assembly is a cylindrical hole. After an assembly screw extends into the second opening 30a for assembly, the rotating member 473 is sleeved on the assembly screw.

Still refer to FIG. 19A. In some embodiments, a third matching portion 30h is disposed on the side of the first surface c1 that is of the outer hinge 30 and that faces the linkage structure 47. As shown in FIG. 19B, the first damping member 60 is placed within the third matching portion 30h, and is disposed to match the third matching portion 30h. The first damping member 60 is also disposed to match the first matching portion 20h in the inner hinge 20, the first matching portion 20h and the third matching portion 30h are paired to form pairing space, and the first damping member 60 can rotate in the pairing space.

In some embodiments, a fourth matching portion 30i is disposed on the side of the first surface c1 that is of the outer hinge 30 and that faces the linkage structure 47, and the second damping member 70 is disposed to match the fourth matching portion 30i. After the second matching portion 20i and the fourth matching portion 30i are paired, the second damping member 70 can rotate in the pairing space. For a structure of the second damping member 70, refer to the foregoing related description about rotation of the first damping member 60 in the pairing space.

In some embodiments, a second opening 30a for assembly is further disposed between the third matching portion 30h and the fourth matching portion 30i. Certainly, the second opening 30a for assembly on the outer hinge 30 is properly disposed based on a structure of the hinge mechanism 2.

FIG. 19A is a diagram of a structure of matching between the outer hinge 30 and one rotating assembly 40. When the hinge mechanism 2 includes a plurality of rotating assemblies 40, the outer hinge 30 may include a plurality of hinge segments that match the rotating assembly 40.

In some embodiments, as shown in FIG. 19A, the outer hinge 30 further includes a second connection portion 30j, and two adjacent hinge segments are connected through the first connection portion 30j. A structure of the second connection portion 30j is not limited in embodiments of this application, and is properly disposed with reference to a structure of the hinge mechanism 2.

For example, the second connection portion 30j includes a second opening 30a for assembly.

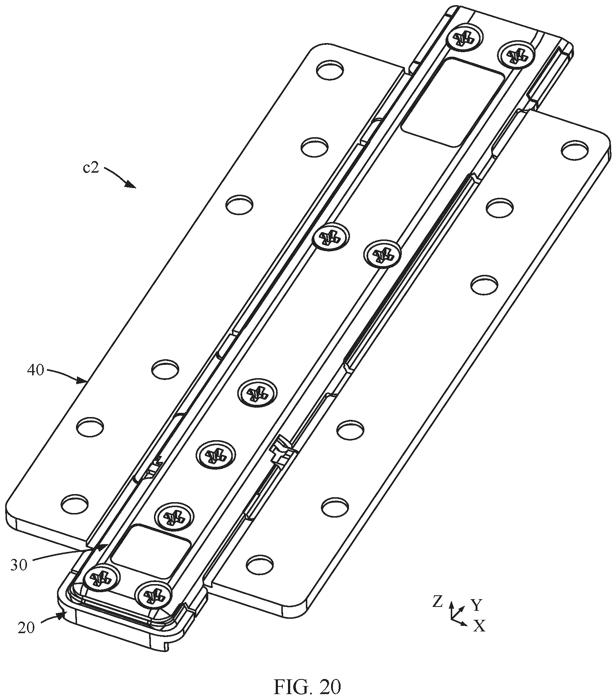

FIG. 20 is a diagram of a structure of an assembled inner hinge, rotating assembly, and outer hinge according to an embodiment of this application.

As shown in FIG. 20, after the inner hinge 20 and the outer hinge 30 are assembled, most parts of the rotating assembly 40 are located in pairing space formed by pairing the inner hinge 20 and the outer hinge 30, and the first plate 45 and the second plate 46 in the rotating assembly 40 extend out of the pairing space and may rotate relative to the inner hinge 20.

In some embodiments, as shown in FIG. 5, the hinge mechanism 2 further includes a decorative cover 50. The decorative cover 50 is located on a side that is of the rotating assembly 40 (or the outer hinge 30) and that is away from the inner hinge 20, and is connected to the inner hinge 20.

The decorative cover 50 is disposed, internal structures of the hinge mechanism can be hidden 2 regardless of whether the hinge mechanism 2 is in the folded state or the flattened state. This improves appearance aesthetics of the hinge mechanism 2. When the hinge mechanism 2 is used in the electronic device 1, when the first housing 11 and the second housing 12 are in the folded state, the decorative cover of the hinge mechanism 2 is exposed, to fill a gap between the first housing 11 and the second housing 12. This ensures appearance aesthetics of the electronic device 1. In other words, regardless of whether the electronic device 1 is in the closed state or in the flattened state, an internal structure is hidden, an appearance of an entire structure is complete, and aesthetics is good.

An embodiment of this application further provides an electronic device 1. Any one of the hinge mechanisms 2 in the foregoing implementations may be applicable to the electronic device 1 provided in this embodiment of this application.

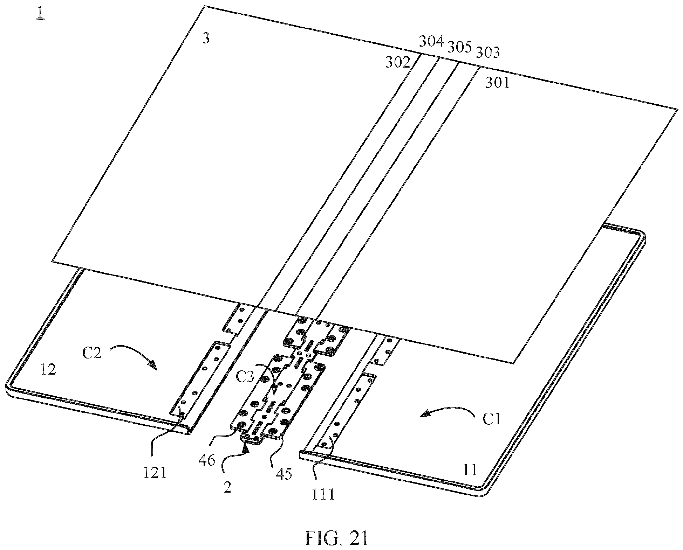

FIG. 21 is an exploded diagram of an electronic device 1 according to an embodiment of this application.

In some embodiments, a two-fold foldable electronic device is used as an example. As shown in FIG. 21, the electronic device 1 includes a first housing 11, a second housing 12, a hinge mechanism 2, and a display 3. The first housing 11 and the second housing 12 are located at two sides of the hinge mechanism 2, and the hinge mechanism 2 is connected to the first housing 11 and the second housing 12 separately.

Structures and shapes of the first housing 11 and the second housing 12 are not limited in embodiments of this application, and structures of housings in a related technology are all applicable to this embodiment of this application.

In some embodiments, the first housing 11 is provided with a first groove 111, the second housing 12 is provided with a second groove 121, a first plate 45 of the hinge mechanism 2 is mounted in the first groove 111, and a second plate 46 is mounted in the second groove 121.

In some embodiments, the hinge mechanism 2 may be connected to the first groove 111 and the second groove 121 by using screws or the like. For example, the first plate 45 in the hinge mechanism 2 is connected to the first groove 111 by using screws, and the second plate 46 in the hinge mechanism 2 is connected to the second groove 121 by using screws.

In some embodiments, the display 3 is disposed on the first housing 11 and the second housing 12. In this case, the first housing 11 and the second housing 12 are further configured to carry the display 3, that is, the display 3 is fastened (for example, pasted) to the first housing 11 and the second housing 12, so that the display 3 is kept as flat as possible in a use process, and a non-display surface of the display 3 is protected.

For example, the first housing 11 includes a first surface C1, the second housing 12 includes a second surface C2, the hinge mechanism 2 includes a third surface C3 on a side that is of an inner hinge 20 and that is away from a rotating assembly 40, the display 3 continuously covers the first surface C1, the third surface C3, and the second surface C2, and the display 3 is fastened to the first surface C1 of the first housing 11 and the second surface C2 of the second housing 12.

The display 3 is, for example, a flexible display, and the flexible display is configured to display an image, a video, and the like. A specific type of the flexible display in this embodiment of this application is not limited. For example, the flexible display may be an active-matrix organic light-emitting diode or an active-matrix organic light-emitting diode (active-matrix organic light-emitting diode, AMOLED) display. The AMOLED display is used as a self-luminous display, and a back light module (back light module, BLM) does not need to be disposed. Therefore, when a substrate of the AMOLED display is made of a flexible resin material, such as polyethylene terephthalate (polyethylene terephthalate, PET), the AMOLED display can have a bendable characteristic. For example, the flexible display may alternatively be an organic light-emitting diode (organic light-emitting diode, OLED) display, a mini light-emitting diode (mini light-emitting diode, mini-LED) display, a micro light-emitting diode (micro light-emitting diode, micro-LED) display, a micro organic light-emitting diode (micro organic light-emitting diode) display, a quantum dot light-emitting diode (quantum dot light-emitting diodes, QLED) display, or the like.

For example, as shown in FIG. 21, the display 3 may include a first part 301, a second part 302, and a third part 303, a fourth part 304, and a fifth part 305 that are located between the first part 301 and the second part 302.

The first part 301 corresponds to and is connected to the first housing 11, the second part 22 corresponds to and is connected to the second housing 12, and the third part 303, the fourth part 304, and the fifth part 305 correspond to the hinge mechanism 2. In a folding process of the hinge mechanism 2, the third part 303, the fourth part 304, and the fifth part 305 are folded. In an unfolding process of the hinge mechanism 2, the third part 303, the fourth part 304, and the fifth part 305 are unfolded.

For example, the third part 303 corresponds to the first plate 45 of the hinge mechanism 2, the fourth part 304 corresponds to the second plate 46 of the hinge mechanism 2, and the fifth part 305 corresponds to the inner hinge 20 of the hinge mechanism 2.

In some embodiments, the third part 303 is not fastened to the first plate 45, the fourth part 304 is not fastened to the second plate 46, and the fifth part 305 is not fastened to the inner hinge 20.

In some other embodiments, the third part 303 is fastened to the first plate 45 (for example, may be adhesive), the fourth part 304 is fastened to the second plate 46 (for example, may be adhesive), and the fifth part 305 is not fastened to the inner hinge 20.

In this embodiment of this application, when the third part 303 is fastened to the first plate 45, and the fourth part 304 is fastened to the second plate 46, in a folding or unfolding process of the electronic device 1, the third part 303 can move with the first plate 45, and the fourth part 304 can move with the second plate 46. In other words, the third part 303 does not move relative to the first plate 45, and the fourth part 304 does not move relative to the second plate 46. This improves flatness of the third part 303 and the fourth part 304 of the display 3 in the unfolding and folding processes, and reduces the risk of failure of the display 3.

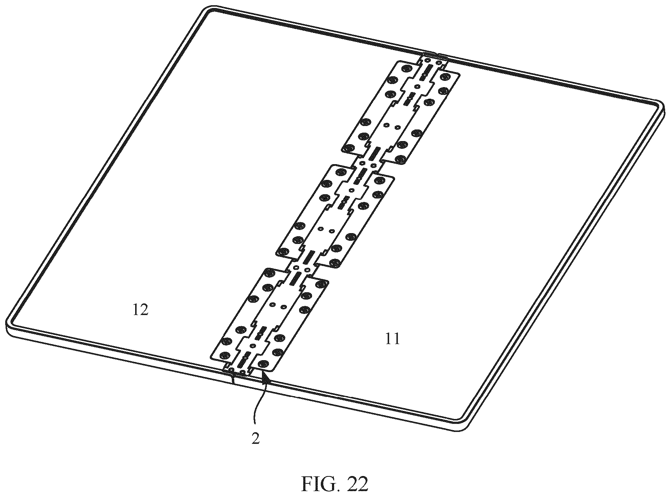

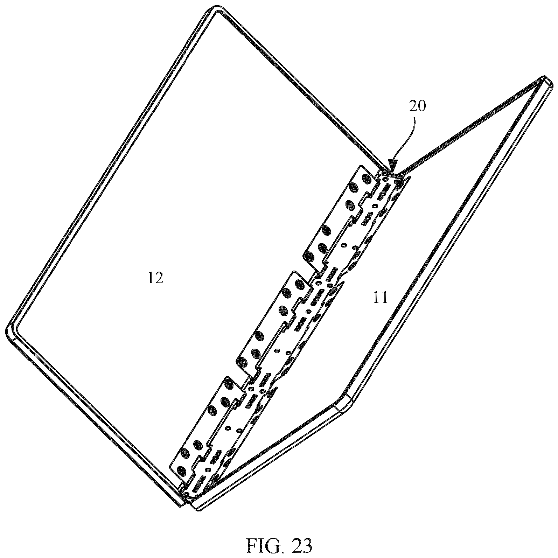

FIG. 22 and FIG. 23 each are a diagram of a use state of the electronic device 1 according to this embodiment of this application.

In a process of using the electronic device 1, the hinge mechanism 2 includes at least an unfolded state shown in FIG. 22 and a folded state shown in FIG. 23.

In the unfolded state, the first housing 11 and the second housing 12 are approximately located on a same plane, so that the display 3 (not shown in FIG. 22) is approximately a plane. In this case, the display 3 is exposed, the user can operate the display 3, and the display 3 can display information such as an image or a video, to implement large-screen display and improve viewing experience of the user. In addition, when the hinge mechanism 2 is in the unfolded state, the first housing 11 and the second housing 12 can rotate face to face (that is, the first housing 11 and the second housing 12 rotate relative to each other in a close manner), to drive the hinge mechanism 2 to be folded.

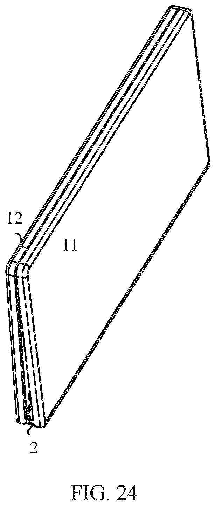

In a folding process, as shown in FIG. 23, an end of the first housing 11 and an end of the second housing 12 that are away from the hinge mechanism 2 are close to each other, so that the electronic device 1 can rotate to be in the folded state. The folded state may be folded into an angle shown in FIG. 23, or may be folded into complete pairing shown in FIG. 24.

As shown in FIG. 24, in a folded state of pairing, the display 3 is located in space enclosed by folding the first housing 11 and the second housing 12. In this case, the display 3 is not exposed, the user cannot operate the display 3, and the electronic device 1 is easy to receive and carry. In addition, when the hinge mechanism 2 is in the folded state, the first housing 11 and the second housing 12 can rotate (a rotation direction is opposite to a rotation direction when the hinge mechanism 2 is folded), to drive the hinge mechanism 2 to unfold, so that the electronic device 1 is in the unfolded state shown in FIG. 22. Therefore, in this application, the hinge mechanism 2 is configured to fold and unfold the electronic device 1.

The third surface C3 that is of the hinge mechanism 2 provided in this embodiment of this application, that is on the inner hinge 20, and that faces the display 3 is a plane. In a process in which the hinge mechanism 2 switches between the folded state and the flattened state, the third surface C3 always provides planar support for the display 3. This can protect the display 3, and improve reliability of the display 3.

In the descriptions of this specification, the described specific features, structures, materials, or characteristics may be combined in a proper manner in any one or more of embodiments or examples.

The foregoing descriptions are only specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A hinge mechanism, comprising:
an inner hinge (20) and an outer hinge (30) that are detachably connected; and
a rotating assembly (40), disposed between the inner hinge (20) and the outer hinge (30), wherein
the rotating assembly (40) comprises a first swing arm (40A), a second swing arm (40B), and a linkage structure (47);
the linkage structure (47) comprises a first translation member (471), a second translation member (472), and a rotating member (473);
the first translation member (471) is slidably connected to the inner hinge (20) and is clamped to the first swing arm (40A); the second translation member (472) is slidably connected to the inner hinge (20) and is clamped to the second swing arm (40B); and the rotating member (473) is connected to the first translation member (471) and the second translation member (472) and is rotatably connected to the inner hinge (20), a rotation axis of the rotating member (473) is parallel to a first direction (Z), and the first direction (Z) is a direction from the inner hinge (20) to the outer hinge (30);
in a process in which the hinge mechanism is switched from a flattened state to a folded state, the first swing arm (40A) and the second swing arm (40B) rotate relative to each other along a rotation axis of the hinge mechanism, to drive the first translation member (471) and the second translation member (472) to slide reversely along directions parallel to a second direction (X); and when the first translation member (471) and the second translation member (472) slide, the rotating member (473) is driven to rotate; and
the second direction (X) intersects both a direction of the rotation axis and the first direction (Z), and the first direction (Z) is perpendicular to the direction of the rotation axis.

2. The hinge mechanism according to claim 1, wherein the first swing arm (40A) comprises a first rotating member (41) and a first plate (45) that are fastened to each other, and the second swing arm (40B) comprises a second rotating member (42) and a second plate (46) that are fastened to each other;
the first rotating member (41) and the second rotating member (42) are located on two sides of the linkage structure (47) along the direction of the rotation axis; and the first plate (45) and the second plate (46) are located on two sides of the linkage structure (47) along the second direction (X); and
the first plate (45) is capable of driving the first rotating member (41) to rotate relative to the inner hinge (20), and the second plate (46) is capable of driving the second rotating member (42) to rotate relative to the inner hinge (20).

3. The hinge mechanism according to claim 2, wherein
the first translation member (471) comprises a first concave portion (4711) that is concave away from the first rotating member (41), the first rotating member (41) comprises a first protrusion portion (411) that protrudes toward the first translation member (471), and the first protrusion portion (411) is connected to the first concave portion (4711) in a fitting manner, to drive the first translation member (471) to move in a rotation process of the first rotating member (41); and/or
the second translation member (472) comprises a second concave portion (4721) that is concave away from the second rotating member (42), the second rotating member (42) comprises a second protrusion portion (421) that protrudes toward the second translation member (472), and the second protrusion portion (421) is connected to the second concave portion (4721) in a fitting manner, to drive the second translation member (472) to move in a rotation process of the second rotating member (42).

4. The hinge mechanism according to claim 3, wherein
the first protrusion portion (411) is located at an end that is of the first rotating member (41) and that is away from the first plate (45), and the first concave portion (4711) is located at an end that is of the first translation member (471) and that is close to the first plate (45); and/or
the second protrusion portion (421) is located at an end that is of the second rotating member (42) and that is away from the second plate (46), and the second concave portion (4721) is located at an end and that is of the second translation member (472) and that is close to the second plate (46).

5. The hinge mechanism according to any one of claims 2 to 4, wherein
the first swing arm (40A) further comprises a third rotating member (43), wherein the third rotating member (43) is fastened to the first plate (45), the third rotating member (43) and the first rotating member (41) are disposed opposite to each other on two sides of the linkage structure (47), and the first plate (45) is further capable of driving the third rotating member (43) to rotate relative to the inner hinge (20); and
the second swing arm (40B) further comprises a fourth rotating member (44), wherein the fourth rotating member (44) is fastened to the second plate (46), the fourth rotating member (44) and the second rotating member (42) are disposed opposite to each other on two sides of the linkage structure (47), and the second plate (46) is further capable of driving the fourth rotating member (44) to rotate relative to the inner hinge (20).

6. The hinge mechanism according to any one of claims 1 to 5, wherein the rotating member (473) comprises a gear, the first translation member (471) comprises a first rack, the second translation member (472) comprises a second rack, and the first rack and the second rack separately mesh with the gear.

7. The hinge mechanism according to any one of claims 1 to 6, wherein
a first guiding portion (20c) is disposed on a side that is of the inner hinge (20) and that faces the linkage structure (47), and the first guiding portion (20c) is capable of guiding the first translation member (471) to move in a direction parallel to the second direction (X); and/or
a second guiding portion (20d) is disposed on a side that is of the inner hinge (20) and that faces the linkage structure (47), and the second guiding portion (20d) is capable of guiding the second translation member (472) to move in a direction parallel to the second direction (X).

8. The hinge mechanism according to claim 7, wherein the first guiding portion (20c) comprises a first guiding groove (20c1) and a first guiding protrusion (20c2) that extend along the second direction (X), the first guiding groove (20c1) is disposed close to the first plate (45), and the first guiding protrusion (20c2) is disposed close to the second plate (46); and/or
the second guiding portion (20d) comprises a second guiding groove and a second guiding protrusion that extend along the second direction (X), the second guiding groove is disposed close to the second plate (46), and the second guiding protrusion is disposed close to the first plate (45).

9. The hinge mechanism according to any one of claims 1 to 8, wherein a first limiting portion (20e) and a second limiting portion (20f) are disposed on the side that is of the inner hinge (20) and that faces the linkage structure (47); and
the first limiting portion (20e) and the second limiting portion (20f) are located on two opposite sides of the rotating member (473) along the second direction (X); and surfaces that are of the first limiting portion (20e) and the second limiting portion (20f) and that face the rotating member (473) are arc-shaped surfaces, and are slidably connected to the rotating member (473).

10. The hinge mechanism according to any one of claims 1 to 9, wherein a surface that is of the inner hinge (20) and that is away from the rotating assembly (40) is a plane.

11. The hinge mechanism according to any one of claims 2 to 10, wherein a first arc-type protrusion portion (21) and a second arc-type protrusion portion (22) are provided on a side that is of the inner hinge (20) and that faces the first rotating member (41) and the second rotating member (42), and a first arc-type concave portion (31) and a second arc-type concave portion (32) are provided on a side that is of the outer hinge (30) and that faces the first rotating member (41) and the second rotating member (42); and
the first arc-type protrusion portion (21) and the first arc-type concave portion (31) enclose a first arc-type groove (U1), and the second arc-type protrusion portion (22) and the second arc-type concave portion (32) enclose a second arc-type groove (U2); and the first rotating member (41) is capable of moving in the first arc-type groove (U1), and the second rotating member (42) is capable of moving in the second arc-type groove (U2).

12. The hinge mechanism according to any one of claims 5 to 11, wherein the rotating assembly (40) further comprises a first damping member (60), and the first damping member (60) is slidably connected to a side of the second rotating member (42) and a side of the third rotating member (43) that are away from the linkage structure (47); and
when the first plate (45) drives the third rotating member (43) to rotate and the second plate (46) drives the second rotating member (42) to rotate, the first damping member (60) is configured to apply resistance to the first plate (45) and the second plate (46).

13. The hinge mechanism according to claim 12, wherein a first cam (431) and a second cam (422) are respectively provided on a side of the third rotating member (43) and a side of the second rotating member (42) that are away from the linkage structure (47);
the first damping member (60) comprises a first conjoined cam (61), a first elastic portion (62), and a first pin shaft (63);
the first conjoined cam (61) is sleeved on an end that is of the first pin shaft (63) and that is close to the linkage structure (47), and meshes with the first cam (431) and the second cam (422); and
the first conjoined cam (61) is rotatably mounted on the first pin shaft (63), and the first elastic portion (62) is sleeved on the first pin shaft (63).

14. The hinge mechanism according to claim 12 or 13, wherein the first swing arm (40A) further comprises a fifth rotating member (48), the fifth rotating member (48) is fastened to the first plate (45), the fifth rotating member (48) and the third rotating member (43) are disposed opposite to each other on two sides of the first damping member (60), and the first plate (45) is further capable of driving the fifth rotating member (48) to rotate relative to the inner hinge (20); and
the second swing arm (40B) further comprises a sixth rotating member (49), the sixth rotating member (49) is fastened to the second plate (46), the sixth rotating member (49) and the second rotating member (42) are disposed opposite to each other on two sides of the first damping member (60), and the second plate (46) is further capable of driving the sixth rotating member (49) to rotate relative to the inner hinge (20).

15. The hinge mechanism according to claim 14, wherein the rotating assembly (40) further comprises a second damping member (70);
the second damping member (70) is slidably connected to a side of the fifth rotating member (48) and a side of the sixth rotating member (49) that are close to the first damping member (60); and
when the first plate (45) drives the fifth rotating member (48) to rotate and the second plate (46) drives the sixth rotating member (49) to rotate, the second damping member (70) is configured to apply resistance to the first plate (45) and the second plate (46).

16. An electronic device, comprising a first housing (11), a second housing (12), a flexible display, and the hinge mechanism (2) according to any one of claims 1 to 15, wherein
the first housing (11) is detachably connected to a first plate (45), and the second housing (12) is detachably connected to a second plate (46); and
the first housing (11) comprises a first surface (B1), the second housing (12) comprises a second surface (B2), the hinge mechanism (2) comprises a third surface (B3) on a side that is of an inner hinge (20) and that is away from a rotating assembly (40), the flexible display continuously covers the first surface (B1), the third surface (B3), and the second surface (B2), and the flexible display is fastened to the first surface (B1) of the first housing (11) and the second surface (B2) of the second housing (12).
